(19) Europäisches Patentamt
European Patent Office
Office européen des brevets

(11) **EP 4 546 912 A1**

(12) **EUROPEAN PATENT APPLICATION**
published in accordance with Art. 153(4) EPC

(43) Date of publication:
**30.04.2025 Bulletin 2025/18**

(21) Application number: **23826232.3**

(22) Date of filing: **14.06.2023**

(51) International Patent Classification (IPC):
**H04W 72/04** (2023.01)    **H04L 5/00** (2006.01)

(52) Cooperative Patent Classification (CPC):
**H04W 72/04; H04W 72/0453; H04W 72/23;**
**H04W 72/232;** H04L 5/00

(86) International application number:
**PCT/CN2023/100172**

(87) International publication number:
**WO 2023/246583 (28.12.2023 Gazette 2023/52)**

(84) Designated Contracting States:
**AL AT BE BG CH CY CZ DE DK EE ES FI FR GB**
**GR HR HU IE IS IT LI LT LU LV MC ME MK MT NL**
**NO PL PT RO RS SE SI SK SM TR**
Designated Extension States:
**BA**
Designated Validation States:
**KH MA MD TN**

(30) Priority: **21.06.2022 CN 202210705568**

(71) Applicant: **Vivo Mobile Communication Co., Ltd.**
**Dongguan, Guangdong 523863 (CN)**

(72) Inventors:
• **WANG, Lihui**
**Dongguan, Guangdong 523863 (CN)**
• **PAN, Xueming**
**Dongguan, Guangdong 523863 (CN)**

(74) Representative: **Germain Maureau**
**12, rue Boileau**
**69006 Lyon (FR)**

(54) **FREQUENCY DOMAIN RESOURCE DETERMINING METHOD, TERMINAL, AND NETWORK SIDE DEVICE**

(57)    This application discloses a frequency domain resource determining method, a terminal, and a network side device, and relates to the field of communication technologies. The frequency domain resource determining method in embodiments of this application includes: determining, by a terminal, related information of a control channel, where the related information of the control channel includes at least one of the following: a first frequency domain resource allocation range of the control channel, a time domain parameter of the control channel, and scheduling information of the control channel; and determining, by the terminal, a bandwidth of a second frequency domain resource allocation range based on the related information, where the second frequency domain resource allocation range is a frequency domain resource allocation range of a transmission target, the transmission target is an object to be transmitted or received by the terminal based on the received control channel, and the transmission target includes at least one of a channel and a signal, where the bandwidth of the second frequency domain resource allocation range is less than or equal to 5 MHz, or the bandwidth of the second frequency domain resource allocation range is less than or equal to 20 MHz.

```
         ┌──────────┐
         │  Start   │
         └────┬─────┘
              ↓
┌─────────────────────────────────────────────┐
│ A terminal determines related information    │── 201
│ of a control channel                         │
└──────────────────┬──────────────────────────┘
                   ↓
┌─────────────────────────────────────────────┐
│ The terminal determines a bandwidth of a     │── 202
│ second frequency domain resource allocation  │
│ range based on the related information        │
└──────────────────┬──────────────────────────┘
                   ↓
         ┌──────────┐
         │   End    │
         └──────────┘
```

**FIG. 2**

**Description**

**CROSS-REFERENCE TO RELATED APPLICATIONS**

This application claims priority to Chinese Patent Application No. 202210705568.8 filed in China on June 21, 2022, which is incorporated herein by reference in its entirety.

**TECHNICAL FIELD**

This application relates to the field of communication technologies, and in particular, to a frequency domain resource determining method, a terminal, and a network side device.

**BACKGROUND**

In some communication systems, a bandwidth of a frequency domain resource allocation range of a channel or a signal of a terminal is usually fixed. For example, a bandwidth of a frequency domain resource allocation range of the terminal transmitting or receiving a channel is fixed to 20 megahertz (Mega Hertz, MHz), or a bandwidth of a frequency domain resource allocation range of the terminal transmitting or receiving a signal is fixed to 20 MHz. This leads to relatively poor flexibility of frequency domain resource allocation.

**SUMMARY**

Embodiments of this application provide a frequency domain resource determining method, a terminal, and a network side device, to resolve a problem of relatively poor flexibility of frequency domain resource allocation.

According to a first aspect, a frequency domain resource determining method is provided, including:

determining, by a terminal, related information of a control channel, where the related information of the control channel includes at least one of the following: a first frequency domain resource allocation range of the control channel, a time domain parameter of the control channel, and scheduling information of the control channel; and
determining, by the terminal, a bandwidth of a second frequency domain resource allocation range based on the related information, where the second frequency domain resource allocation range is a frequency domain resource allocation range of a transmission target, the transmission target is an object to be transmitted or received by the terminal based on the received control channel, and the transmission target includes at least one of a channel and a signal, where
the bandwidth of the second frequency domain resource allocation range is less than or equal to 5 MHz, or the bandwidth of the second frequency domain resource allocation range is less than or equal to 20 MHz.

According to a second aspect, a frequency domain resource determining method is provided, including:

determining, by a network side device, related information of a control channel, where the related information of the control channel includes at least one of the following: a first frequency domain resource allocation range of the control channel, a time domain parameter of the control channel, and scheduling information of the control channel; and
determining, by the network side device, a bandwidth of a second frequency domain resource allocation range based on the related information, where the second frequency domain resource allocation range is a frequency domain resource allocation range of a transmission target, the transmission target is an object to be transmitted or received by the network side device based on the transmitted control channel, and the transmission target includes at least one of a channel and a signal, where the bandwidth of the second frequency domain resource allocation range is less than or equal to 5 MHz, or the bandwidth of the second frequency domain resource allocation range is less than or equal to 20 MHz.

According to a third aspect, a frequency domain resource determining apparatus is provided, including:

a first determining module, configured to determine related information of a control channel, where the related information of the control channel includes at least one of the following: a first frequency domain resource allocation range of the control channel, a time domain parameter of the control channel, and scheduling information of the control channel; and
a second determining module, configured to determine a bandwidth of a second frequency domain resource allocation range based on the related information, where the second frequency domain resource allocation range is a frequency domain resource allocation range of a transmission target, the transmission target is an object to be transmitted or received by a terminal based on the received control channel, and the transmission target includes at least one of a channel and a signal, where
the bandwidth of the second frequency domain resource allocation range is less than or equal to 5 MHz, or the bandwidth of the second frequency domain resource allocation range is less than or equal to 20 MHz.

According to a fourth aspect, a frequency domain resource determining apparatus is provided, including:

a first determining module, configured to determine related information of a control channel, where the related information of the control channel includes at least one of the following: a first frequency domain resource allocation range of the control channel, a time domain parameter of the control channel, and scheduling information of the control channel; and

a second determining module, configured to determine a bandwidth of a second frequency domain resource allocation range based on the related information, where the second frequency domain resource allocation range is a frequency domain resource allocation range of a transmission target, the transmission target is an object to be transmitted or received by a network side device based on the transmitted control channel, and the transmission target includes at least one of a channel and a signal, where

the bandwidth of the second frequency domain resource allocation range is less than or equal to 5 MHz, or the bandwidth of the second frequency domain resource allocation range is less than or equal to 20 MHz.

According to a fifth aspect, a terminal is provided, including a processor and a memory, where the memory stores a program or an instruction runnable on the processor, and the program or the instruction, when executed by the processor, implements the steps of the frequency domain resource determining method on a terminal side provided in the embodiments of this application.

According to a sixth aspect, a terminal is provided, including: a processor and a communication interface, where the processor or the communication interface is configured to determine related information of a control channel, where the related information of the control channel includes at least one of the following: a first frequency domain resource allocation range of the control channel, a time domain parameter of the control channel, and scheduling information of the control channel; and a second determining module, configured to determine a bandwidth of a second frequency domain resource allocation range based on the related information, where the second frequency domain resource allocation range is a frequency domain resource allocation range of a transmission target, the transmission target is an object to be transmitted or received by the terminal based on the received control channel, and the transmission target includes at least one of a channel and a signal, where the bandwidth of the second frequency domain resource allocation range is less than or equal to 5 MHz, or the bandwidth of the second frequency domain resource allocation range is less than or equal to 20 MHz.

According to a seventh aspect, a network side device is provided, including a processor and a memory, where the memory stores a program or an instruction runnable on the processor, and the program or the instruction, when executed by the processor, implements the steps of the frequency domain resource determining method on a network side device side provided in the embodiments of this application.

According to an eighth aspect, a network side device is provided, including a processor and a communication interface. The processor or the communication interface is configured to: determine related information of a control channel, where the related information of the control channel includes at least one of the following: a first frequency domain resource allocation range of the control channel, a time domain parameter of the control channel, and scheduling information of the control channel; and determine a bandwidth of a second frequency domain resource allocation range based on the related information, where the second frequency domain resource allocation range is a frequency domain resource allocation range of a transmission target, the transmission target is an object to be transmitted or received by the network side device based on the transmitted control channel, and the transmission target includes at least one of a channel and a signal, where the bandwidth of the second frequency domain resource allocation range is less than or equal to 5 MHz, or the bandwidth of the second frequency domain resource allocation range is less than or equal to 20 MHz.

According to a ninth aspect, a readable storage medium is provided, storing a program or an instruction, where the program or the instruction, when executed by a processor, implements the steps of the frequency domain resource determining method on a terminal side provided in the embodiments of this application, or the program or the instruction, when executed by a processor, implements the steps of the frequency domain resource determining method on a network side device side provided in the embodiments of this application.

According to a tenth aspect, a chip is provided, including a processor and a communication interface, where the communication interface is coupled to the processor, and the processor is configured to run a program or an instruction to implement the frequency domain resource determining method on a terminal side provided in the embodiments of this application, or the processor is configured to run a program or an instruction to implement the frequency domain resource determining method on a network side device side provided in the embodiments of this application.

According to an eleventh aspect, a computer program/program product is provided. The computer program/program product is stored in a storage medium. The computer program/program product is executed by at least one processor to implement the steps of the frequency domain resource determining method on a terminal side provided in the embodiments of this application, or the computer program/program product is executed by at least one processor to implement the steps of the frequency domain resource determining method on a network side device side provided in the embodiments of this application.

According to a twelfth aspect, a frequency domain resource determining system is provided, including: a terminal and a network side device, where the terminal may be configured to perform the steps of the frequency domain resource determining method according to the first aspect, and the network side device may be configured to perform the steps of the frequency domain resource determining method according to the second aspect.

In the embodiments of this application, a terminal determines related information of a control channel, where the related information of the control channel includes at least one of the following: a first frequency domain resource allocation range of the control channel, a time domain parameter of the control channel, and scheduling information of the control channel; and the terminal determines a bandwidth of a second frequency domain resource allocation range based on the related information, where the second frequency domain resource allocation range is a frequency domain resource allocation range of a transmission target, the transmission target is an object to be transmitted or received by the terminal based on the received control channel, and the transmission target includes at least one of a channel and a signal. The bandwidth of the second frequency domain resource allocation range is less than or equal to 5 MHz, or the bandwidth of the second frequency domain resource allocation range is less than or equal to 20 MHz. In this way, the bandwidth of the second frequency domain resource allocation range can be determined based on the related information of the control channel. Compared with the related art in which the bandwidth of the frequency domain resource allocation range is fixed, the embodiments of this application can improve flexibility of frequency domain resource allocation.

## BRIEF DESCRIPTION OF THE DRAWINGS

FIG. 1 is a block diagram of a wireless communication system to which an embodiment of this application is applicable;
FIG. 2 is a flowchart of a frequency domain resource determining method according to an embodiment of this application;
FIG. 3 is a schematic diagram showing reception by a terminal according to an embodiment of this application;
FIG. 4 is a schematic diagram showing reception by a terminal according to an embodiment of this application;
FIG. 5 is a schematic diagram showing reception by a terminal according to an embodiment of this application;
FIG. 6 is a schematic diagram showing reception by a terminal according to an embodiment of this application;
FIG. 7 is a flowchart of another frequency domain resource determining method according to an embodiment of this application;
FIG. 8 is a structural diagram of a frequency domain resource determining apparatus according to an embodiment of this application;
FIG. 9 is a structural diagram of another frequency domain resource determining apparatus according to an embodiment of this application;
FIG. 10 is a structural diagram of a communication device according to an embodiment of this application;
FIG. 11 is a structural diagram of a terminal according to an embodiment of this application; and
FIG. 12 is a structural diagram of a network side device according to an embodiment of this application.

## DETAILED DESCRIPTION

The technical solutions in embodiments of this application are clearly described in the following with reference to the accompanying drawings in the embodiments of this application. Apparently, the described embodiments are merely some rather than all of the embodiments of this application. All other embodiments obtained by a person of ordinary skill in the art based on the embodiments of this application fall within the protection scope of this application.

The terms "first", "second", and so on in this specification and claims of this application are intended to distinguish between similar objects but are not intended to describe a specific order or sequence. It should be understood that the terms used in such a way are interchangeable in proper circumstances, so that the embodiments of this application can be implemented in other sequences than those illustrated or described herein. In addition, the objects distinguished by "first" and "second" are usually of one type, and there is no limitation on quantities of the objects. For example, there may be one or more first objects. In addition, "and/or" in this specification and the claims indicate at least one of the connected objects, and the character "/" usually indicates an "or" relationship between the associated objects.

It should be noted that, the technologies described in the embodiments of this application are not limited to a Long Term Evolution (Long Term Evolution, LTE)/LTE-Advanced (LTE-Advanced, LTE-A) system, and can be further used in other wireless communication systems, such as Code Division Multiple Address (Code Division Multiple Access, CDMA), Time Division Multiple Access (Time Division Multiple Access, TDMA), Frequency Division Multiple Access (Frequency Division Multiple Access, FDMA), orthogonal frequency division multiple access (Orthogonal Frequency Division Multiple Access, OFDMA), single-carrier frequency division multiple access (Single-carrier Frequency-Division Multiple Access, SC-FDMA), and other systems. The terms "system" and "network" in the embodiments of this application are often used interchangeably, and the described technologies can be used not only for the above-mentioned systems and radio technologies, but also for other systems and radio technologies. The following descriptions describe a New Radio (New Radio, NR) system for exemplary purposes, and NR terms are used in most of the following descriptions. However, these technologies are also applicable to applications other than the NR system application, such as a 6th generation (6th Generation, 6G) communication system.

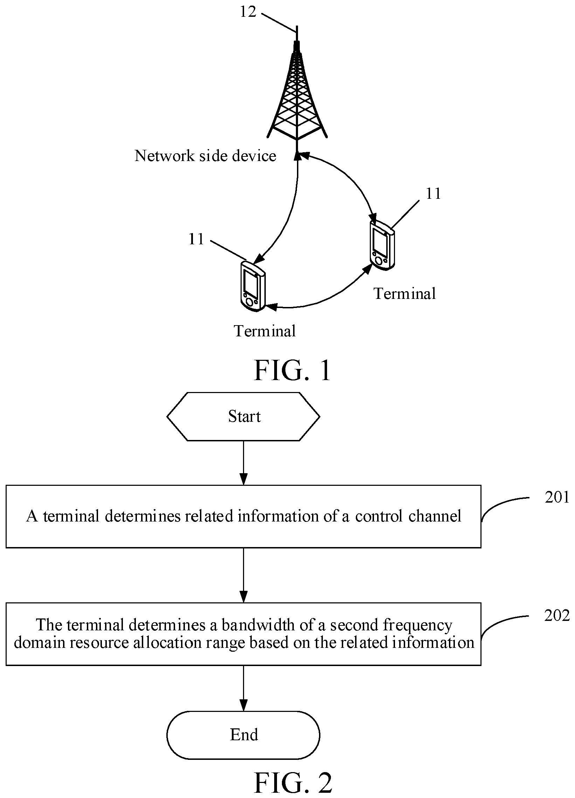

FIG. 1 is a block diagram of a wireless communication system to which an embodiment of this application is applicable. The wireless communication system includes a terminal 11 and a network side device 12. The terminal 11 may be a mobile phone, a tablet personal computer (Tablet Personal Computer), a laptop computer (Laptop Computer) or referred to as a notebook computer, a personal digital assistant (Personal Digital Assistant, PDA), a palmtop computer, a netbook, an ultra-mobile personal computer (ultra-mobile personal computer, UMPC), a mobile Internet device (Mobile Internet Device, MID), an augmented reality (augmented reality, AR)/virtual reality (virtual reality, VR) device, a robot, a wearable device (Wearable Device), a vehicular user equipment (Vehicle User Equipment, VUE), a pedestrian user equipment (Pedestrian User Equipment, PUE), a smart home (a home device having a wireless communication function, such as a refrigerator, a television, a washing machine, or furniture), a game console, a personal computer (personal computer, PC), a teller machine, a self-service machine, and other terminal-side devices. The wearable device includes a smartwatch, a smart band, a smart headphone, smart glasses, smart jewelry (a smart bracelet, a smart wrist-band, a smart ring, a smart necklace, a smart anklet, a smart ankle chain, and the like), a smart wrist strap, smart clothes, and the like. It should be noted that a specific type of the terminal 11 is not limited in this embodiment of this application. The network side device 12 may include an access network device or a core network device. The access network device may also be referred to as a radio access network device, a radio access network (Radio Access Network, RAN), a radio access network function, or a radio access network unit. The access network device may include a base station, a wireless local area network (Wireless Local Area Networks, WLAN) access point, a WiFi node, or the like. The base station may be referred to as a NodeB, an evolved NodeB (eNB), an access point, a base transceiver station (Base Transceiver Station, BTS), a radio base station, a radio transceiver, a basic service set (Basic Service Set, BSS), an extended service set (Extended Service Set, ESS), a home node B, a home evolved NodeB, a transmitting/receiving point (Transmitting Receiving Point, TRP), or some other suitable term in the art. As long as the same technical effect is achieved, the base station is not limited to a specific technical term. It should be noted that in this embodiment of this application, only a base station in an NR system is used as an example for description, and a specific type of the base station is not limited. The core network device may include, but is not limited to, at least one of the following: a core network node, a core network function, a mobility management entity (Mobility Management Entity, MME), an access and mobility management function (Access and Mobility Management Function, AMF), a session management function (Session Management Function, SMF), a user plane function (User Plane Function, UPF), a policy control function (Policy Control Function, PCF), a policy and charging rules function (Policy and Charging Rules Function, PCRF), an edge application server discovery function (Edge Application Server Discovery Function, EASDF), unified data management (Unified Data Management, UDM), a unified data repository (Unified Data Repository, UDR), a home subscriber server (Home Subscriber Server, HSS), a centralized network configuration (Centralized network configuration, CNC), a network repository function (Network Repository Function, NRF), a network exposure function (Network Exposure Function, NEF), a local NEF (Local NEF, or L-NEF), a binding support function (Binding Support Function, BSF), an application function (Application Function, AF), or the like. It should be noted that in this embodiment of this application, only a core network device in an NR system is used as an example for description, and a specific type of the core network device is not limited.

In some implementations, the terminal in this embodiment of this application may be a device with a reduced capability (Device with Reduced Capability, RedCap). The terminal may support a bandwidth of 5 MHz, and the bandwidth of 5 MHz is applied only to a baseband bandwidth (Baseband Band Width, BB BW) or a radio frequency bandwidth (Radio Frequency Band Width, RF BW) of the RedCap. In addition, the bandwidth of 5 MHz may be a continuous or discrete bandwidth of 5 MHz.

In some implementations, the radio frequency and baseband bandwidths of the RedCap are both 5 MHz for uplink and downlink.

In some implementations, the baseband bandwidth of the RedCap is 5 MHz and is used for all signals and channels, and the radio frequency bandwidth still remains 20 MHz and is used for uplink and downlink.

In some implementations, the baseband bandwidth of the RedCap is 5 MHz and is used only for a physical downlink shared channel (Physical downlink shared channel, PDSCH) and a physical uplink shared channel (Physical Uplink Shared Channel, PUSCH). The PDSCH may include unicast or broadcast. The radio frequency bandwidth is 20 MHz for uplink and downlink. In addition, besides the PDSCH and the PUSCH, other physical channels such as a synchronization signal block (Synchronization Signal Block, SSB), a physical downlink control channel (Physical downlink control channel, PDCCH), a physical random access channel (Physical Random Access Channel, PRACH), and a physical uplink control channel (Physical Uplink Control Channel, PUCCH), and a reference signal still use 20 MHz as a maximum radio frequency bandwidth. The reference signal may include, but is not limited to: a channel state information reference signal (Channel State Information Reference Signal, CSI-CSI) or a sounding reference signal (Sounding Reference Signal, SRS).

In some embodiments, the bandwidth of 5 MHz may be replaced with the following:

for a subcarrier spacing (Subcarrier Spacing, SCS) of 15 KHz, the bandwidth of 5 MHz includes 25 physical resource blocks (Physical Resource Blocks, PRBs); and
for an SCS of 30 KHz, the bandwidth of 5 MHz includes 11 or 12 PRBs.

In addition, in some implementations, for a data channel, the bandwidth of 5 MHz may be understood as that a quantity/size of frequency domain resources occupied by the data channel is not greater than 5 MHz.

With reference to the accompanying drawings, the following describes in detail a frequency domain resource determining method, a terminal, and a network side device according to embodiments of this application by using some embodiments and application scenarios thereof.

Refer to FIG. 2. FIG. 2 is a flowchart of a frequency domain resource determining method according to an embodiment of this application. As shown in FIG. 2, the method includes the following steps:

Step 201: A terminal determines related information of a control channel, where the related information of the control channel includes at least one of the following: a first frequency domain resource allocation range of the control channel, a time domain parameter of the control channel, and scheduling information of the control channel.

The related information of the control channel may be configured by a network side for the terminal, or may be determined by the terminal based on a predefined rule, or may be defined in a protocol, or the like. This is not limited. In addition, the related information of the control channel may be determined by the terminal before the terminal receives the control channel, or may be determined by the terminal during detection of the control information, or may be determined by the terminal after the terminal receives the control channel.

The first frequency domain resource allocation range may be a bandwidth or a specific frequency domain position of the first frequency domain resource allocation range, for example, a frequency domain resource configuration of the control information. The time domain parameter of the control channel may be a time domain resource configuration of the control channel, for example, a time domain position or a time interval associated with the control channel. The scheduling information of the control channel may be information scheduled by the control information, or the scheduling information of the control channel may be capability information of the terminal related to scheduling of the control channel.

Step 202: The terminal determines a bandwidth of a second frequency domain resource allocation range based on the related information, where the second frequency domain resource allocation range is a frequency domain resource allocation range of a transmission target, the transmission target is an object to be transmitted or received by the terminal based on the received control channel, and the transmission target includes at least one of a channel and a signal.

The bandwidth of the second frequency domain resource allocation range is less than or equal to 5 MHz, or the bandwidth of the second frequency domain resource allocation range is less than or equal to 20 MHz.

The transmission target may be a channel, for example, a data channel, or the transmission target may be a signal, for example, a reference signal.

In some implementations, the transmission target may be a target scheduled by the control information. The object to be transmitted or received by the terminal based on the received control channel may be understood as an object to be transmitted or received by the terminal based on scheduling of the control information, for example, a channel or a signal transmitted or received by the terminal based on scheduling of the control information.

In some implementations, the transmission target may be a transmission target triggered by the control information. The object to be transmitted or received by the terminal based on the received control channel may be understood as an object to be transmitted or received by the terminal triggered based on the received control information, for example, a channel or a signal transmitted or received by the terminal triggered based on the control information.

That the terminal determines a bandwidth of a second frequency domain resource allocation range based on the related information may be: the terminal determines, based on the related information, that the bandwidth of the second frequency domain resource allocation range is less than or equal to 5 MHz, or less than or equal to 20 MHz.

In this embodiment of this application, the bandwidth of the second frequency domain resource allocation range can be determined based on the related information of the control channel through the foregoing steps. In this way, compared with the related art in which the bandwidth of the frequency domain resource allocation range is fixed, this embodiment of this application can improve flexibility of frequency domain resource allocation. In addition, the network side may schedule the terminal for transmission within the second frequency domain resource allocation range, to improve scheduling flexibility of the network side.

In this embodiment of this application, through the foregoing steps, the bandwidth of the second frequency domain resource allocation range can be less than or equal to 5 MHz in some cases. Therefore, communication of a RedCap terminal with a maximum bandwidth of 5 MHz is supported, and storage complexity of the terminal can be reduced. In some cases, the second frequency domain resource allocation range is less than or equal to 20 MHz. This can ensure flexibility of network scheduling. In addition, a frequency domain range for receiving a data channel or a reference signal may exceed 5 MHz. The terminal may buffer some useless signals or data until a scheduled PDCCH is decoded, to determine a PRB on which the scheduled data or reference signal is located. In addition, because the second frequency domain resource allocation range is less than or equal to 20 MHz, communication of a non-RedCap terminal may be supported, to implement coexistence between the RedCap terminal and the non-Red-Cap terminal.

In an optional implementation, the method further includes at least one of the following:

the terminal transmits the transmission target within the second frequency domain resource allocation range; or
the terminal receives the transmission target within the second frequency domain resource allocation range.

In an optional implementation, the second frequency domain resource allocation range is a frequency domain resource allocation range of the transmission target considered or expected by the terminal.

The frequency domain resource allocation range of the transmission target considered or expected by the terminal may be a bandwidth of the frequency domain resource allocation range of the transmission target considered or expected by the terminal, that is, the bandwidth is considered or expected by the terminal, and the terminal considers or expects that the network side device does not exceed the bandwidth when allocating frequency domain resources of the transmission target.

If the second frequency domain resource allocation range determined by the network side device is inconsistent with that considered or expected by the terminal, the behavior of the terminal may be an undefined behavior, or the terminal considers that there is an error. Alternatively, in case of the inconsistency, the terminal still receives or transmits the transmission target in the second frequency domain resource allocation range considered or expected by the terminal.

In an optional implementation, in a case that the bandwidth of the first frequency domain resource allocation range is less than or equal to 20 MHz, the bandwidth of the second frequency domain resource allocation range is less than or equal to 5 MHz, or the bandwidth of the second frequency domain resource allocation range is less than or equal to 20 MHz; and/or
in a case that the bandwidth of the first frequency domain resource allocation range is less than or equal to 5 MHz, the bandwidth of the second frequency domain resource allocation range is less than or equal to 5 MHz.

For example, when a resource allocation range of the control channel in frequency domain is less than or equal to 20 MHz (for example, greater than 5 MHz and less than 20 MHz), the terminal considers or expects that a resource allocation range of a channel or a signal (for example, a data channel or a reference signal) scheduled by the control channel in frequency domain may be at least one of the following:

less than or equal to 5 MHz; or
less than or equal to 20 MHz (for example, greater than 5 MHz and less than or equal to 20 MHz).

For example, when the resource allocation range of the control channel in frequency domain is less than or equal to 5 MHz, the terminal does not expect that the resource allocation range of the channel or the signal (for example, the data channel or the reference signal) scheduled by the control channel in frequency domain is greater than 5 MHz.

In this implementation, the bandwidth of the second frequency domain resource allocation range can be directly determined according to the bandwidth of the first frequency domain resource allocation range, to reduce complexity of determining the bandwidth.

In an optional implementation, the first frequency domain resource allocation range includes a frequency domain resource allocation range of a first control resource set (Control resource set, CORESET) associated with the control channel. The first control resource set is a control resource set for scheduling a target system information block (System Information Block, SIB). A bandwidth of the frequency domain resource allocation range of the first control resource set is less than or equal to 20 MHz. The target SIB includes a SIB 1.

In a first condition, the second frequency domain resource allocation range is equal to the frequency domain resource allocation range of the first control resource set; and/or
in a second condition, the bandwidth of the second frequency domain resource allocation range is less than or equal to 5 MHz, and/or a start position of the second frequency domain resource allocation range is the same as a start position of the first control resource set.

The first control resource set may be a CORESET 0 defined in a protocol. The CORESET 0 is a special CORESET and used for scheduling the SIB 1. This is not limited. Alternatively, a control information resource set for scheduling the target SIB may be defined in a subsequent protocol. In addition, the target SIB may or may not include another SIB in addition to the SIB 1. The SIB 1 is the SIB 1 defined in the protocol.

The first condition includes at least one of the following:

a PDCCH is received in a first common search space (Common Search Space, CSS);
a PDCCH received by the terminal is scrambled by a first radio network temporary identifier (Radio Network Temporary Identifier, RNTI);
the terminal is in an idle state (idle) or an inactive state (inactive); and
the terminal has not reported, to a network side, capability information of the terminal supporting a maximum of 5 MHz.

The first CSS includes at least one of the following:

a CSS for scheduling the target SIB, where the target SIB includes the SIB 1;
a CSS for scheduling another SIB, where the another SIB is a SIB other than the target SIB;
a CSS for receiving a PDCCH of information 2 (MSG2) in a random access procedure;
a CSS for receiving a PDCCH of information B (MSGB) in a random access procedure;
a CSS for receiving a PDCCH of information 4 (MSG4) in a random access procedure;
a CSS for receiving a PDCCH for paging; and
a CSS for receiving a PDCCH of paging early identification information.

The CSS for scheduling the target SIB may be a Type0 CSS (Type0 CSS) defined in the protocol. The CSS for scheduling the another SIB may be a Type0A CSS defined in the protocol.

The CSS for receiving the PDCCH of the information 2 (MSG2) in the random access procedure may be a Type1 CSS defined in the protocol. The CSS for receiving the PDCCH of the information B (MSGB) in the random access procedure may be a Type1 CSS defined in the protocol. The CSS for receiving the PDCCH of the information 4 (MSG4) in the random access procedure may be a Type1 CSS defined in the protocol.

The CSS for receiving the PDCCH for paging may be a Type2 CSS defined in the protocol.

The CSS for receiving the PDCCH of the paging early identification information may be a Type2 CSS defined in the protocol.

It should be noted that a specific type of the foregoing CSS is not limited in this embodiment of this application. For example, in addition to the Type0 CSS, the Type0A CSS, the Type1 CSS, and the Type2 CSS, the first CSS may alternatively be another type of CSS.

The first RNTI may include at least one of the following:

a system information RNTI (System Information RNTI, SI-RNTI), a paging RNTI (Paging RNTI, P-RNTI), a random access RNTI (Random Access RNTI, RA-RNTI), a message B MSGB (MSGB-RNTI), and a temporary cell-radio network temporary identifier (Temporary Cell-Radio Network Temporary Identifier, TC-RNTI).

That the terminal has not reported, to a network side, capability information of the terminal supporting a maximum of 5 MHz may be: when the terminal in the idle/inactive state initiates random access, the terminal has not reported, to the network according to a network configuration (the configuration is that the terminal is allowed or not allowed to report a type thereof), a capability of supporting a maximum bandwidth of 5 MHz in an MSG1, an MSGA, or an MSG3.

The second condition includes at least one of the following:

a PDCCH is received in a second CSS;
a PDCCH is received in a UE-specific search space (UE-specific search space, USS);
a PDCCH received by the terminal is scrambled by a second RNTI;
the terminal is in a connected state (connected); and
the terminal reports, to a network side, capability information of the terminal supporting a maximum of 5 MHz.

The second CSS includes a CSS for receiving a set of common downlink control information DCI for the terminal.

The CSS for receiving a set of common downlink control information DCI for the terminal may be a Type3 CSS defined in the protocol.

The second RNTI may include at least one of the following:

a cell RNTI (Cell RNTI, C-RNTI), a modulation and coding scheme cell RNTI (Modulation and Coding Scheme Cell--RNTI, MCS-C-RNTI), and a configured scheduling RNTI (Configured Scheduling RNTI, CS-RNTI).

In an optional implementation, the first frequency domain resource allocation range includes a frequency domain resource allocation range of a second control resource set associated with the control channel. The second control resource set is not used for scheduling a target SIB. A bandwidth of the frequency domain resource allocation range of the second control resource set is less than or equal to 20 MHz. The target SIB includes a SIB 1.

The bandwidth of the second frequency domain resource allocation range is less than or equal to 5 MHz, and/or a start position of the second frequency domain resource allocation range is the same as a start position of the control resource set or a currently active bandwidth part (Bandwidth Part, BWP); and/or in a third condition, the bandwidth of the second frequency domain resource allocation range is less than or equal to 5 MHz, or the bandwidth of the second frequency domain resource allocation range is less than or equal to 20 MHz. The third condition includes:

there is no overlap between a slot in which a PDCCH received by the terminal on the control channel is located and a slot in which the transmission target is located.

The second control resource set may be a control resource set other than that used for scheduling the target SIB, for example, a CORESET i, where i ≠ 0.

The PDCCH received by the terminal on the control channel may be that the control channel received by the terminal includes the PDCCH. For example, the control channel is the PDCCH.

In an embodiment as follows:

when 5 MHz ≤ CORESET 0 ≤ 20 MHz, when the terminal detects a PDCCH on the CORESET 0, and the PDCCH schedules data, the terminal may have the following behavior:

terminal behavior 1: the terminal considers that a frequency domain resource range scheduled/allocated to the data is the same as a frequency domain resource range in which the CORESET0 is located; or

terminal behavior 2: the terminal does not expect that a frequency domain resource range scheduled/allocated to the data exceeds 5 MHz, and a start position of the 5 MHz is the same as a start position of the CORESET 0; or

terminal behavior 3: if the detected PDCCH is at least a Type0 CSS or a Type0/0A/1/2 CSS, or the detected PDCCH is scrambled by an SI-RNTI or is a PDCCH scrambled by an SI-RNTI/P-RNTI/RA-RNTI/MSGB-RNTI/TC-RNTI, or the terminal is in an idle/inactive state, the terminal behavior is the foregoing terminal behavior 1; or if the detected PDCCH is a Type3 CSS or a USS, or the detected PDCCH is a PDCCH scrambled by a C-RNTI, an MCS-C-RNTI, or a CS-RNTI, or the terminal is in a connected state, the terminal behavior is the foregoing terminal behavior 2; or

terminal behavior 4: when a terminal in an idle/inactive state initiates random access, according to a network configuration (the configuration is that the terminal is allowed or not allowed to report a type thereof), if the terminal reports the type of the terminal to the network in an MSG1, an MSGA, or an MSG3, that is, the capability of supporting a maximum bandwidth of 5 MHz, the terminal behavior of the terminal in subsequent MSG2, MSG3, and MSG4 transmission is the terminal behavior 2; otherwise, the terminal behavior is the terminal behavior 1.

When for the CORESET i, i ≠ 0, and 5 MHz ≤ CORESET i = 20 MHz, when the terminal detects a PDCCH on the CORESET i, and the PDCCH schedules data, the terminal may have the following behavior:

terminal behavior 1': the terminal does not expect that a frequency domain resource range scheduled/allocated to the data exceeds 5 MHz, and a start position of the 5 MHz is the same as a start position of a current active BWP; or

terminal behavior 2': if there is no overlap in time domain between the slot in which the PDCCH is located and a slot in which the data/reference signal scheduled by the PDCCH is located, the terminal considers/expects that a resource allocation range of a channel/signal scheduled by the control channel, for example, a data channel or a reference signal, in frequency domain may be greater than 5 MHz; otherwise, the behavior of the terminal is the terminal behavior 1'.

In an optional implementation, the first frequency domain resource allocation range includes a frequency domain resource allocation range of a third control resource set associated with the control channel.

The third control resource set associated with the control channel may be a control resource set associated with a CSS corresponding to the control channel. In this way, the bandwidth of the second frequency domain resource allocation range can be determined based on a bandwidth of the control resource set associated with the CSS corresponding to the control channel.

In an optional implementation, the time domain parameter of the control channel includes a time domain interval between a last time domain symbol on which a PDCCH received by the terminal on the control channel is located and a first time domain symbol. The first time domain symbol is a first time domain symbol on which the transmission target is located.

In an optional implementation, the scheduling information of the control channel includes at least one of the following:

scheduling capability information of the terminal for scheduling the transmission target for the control channel, where the scheduling capability information indicates whether cross-slot scheduling of the control channel and the transmission target is supported;

cross-slot scheduling configuration information of a network side for scheduling the transmission target for the control channel; and

transmission mode information of the transmission target scheduled by the control channel.

In some implementations, in a fourth condition, the bandwidth of the second frequency domain resource allocation range is less than or equal to 5 MHz.

The fourth condition may include at least one of the following:

a CSS corresponding to the control channel is a CSS for scheduling a target SIB, the third control resource set is a control resource set for scheduling the target SIB, a bandwidth of the frequency domain resource allocation range of the third control resource set is less than or equal to 5 MHz, and the target SIB includes a SIB 1;

the time domain interval is less than or equal to a first time, where the first time is a time required by the terminal to demodulate the PDCCH;

the scheduling capability information indicates that the terminal does not support the cross-slot scheduling of the control channel and the transmission target, or the terminal has not reported capability information of supporting the cross-slot scheduling of the control channel and the transmission target;

the cross-slot scheduling configuration information indicates that the cross-slot scheduling of the control channel and the transmission target is not configured;

the transmission mode information indicates that no repeated transmission is performed on the transmission target; and

the transmission mode information indicates that no frequency hopping transmission is performed on the transmission target in time domain.

The CSS for scheduling the target SIB may be a Type0 CSS defined in the protocol. In this way, in a case that a resource allocation range of a CORESET 0 (or described as a CORESET #0) associated with the Type0 CSS in frequency domain is not greater than 5 MHz, the terminal does not expect that a resource allocation range of a channel or a signal (for example, a data channel or a reference signal) scheduled by the control channel in frequency domain is greater than 5 MHz, or the terminal considers or expects that a resource allocation range of a channel or a signal (for example, a data channel or a reference signal) scheduled by the control channel in frequency domain is not greater than 5 MHz.

That the time domain interval is less than or equal to a first time may be that a time between a last orthogonal frequency division multiplex (Orthogonal frequency division multiplex, OFDM) symbol on which the PDCCH received by the terminal on the control channel is located and a first OFDM symbol on which the transmission target scheduled by the control channel is located is less than or equal to the first time.

In some implementations, the first time is determined by at least one of the following:

a capability of the terminal;
a physical downlink shared channel PDSCH processing time configured by the network side;
a physical uplink shared channel PUSCH processing time configured by the network side; and
a subcarrier spacing SCS of the PDCCH and an SCS of the transmission target.

The capability of the terminal may indicate whether the terminal supports a processing time (the processing time capability may be referred to as a PDSCH/PUSCH processing time capability 1) that is more relaxed than a PDSCH/PUSCH processing time capability 1 (the capability may be referred to as a Cap #1). If yes, the first time is the processing time that is more relaxed than the PDSCH/PUSCH processing time capability 1.

The PDSCH/PUSCH processing time configured by the network side may be one of processing time Cap #1, Cap #2, and Cap #3. Cap #2 is a processing time other than the foregoing Cap #1 and Cap #3. The first time may be the PDSCH/PUSCH processing time, or may be a processing time that is more relaxed than the PDSCH/PUSCH processing time.

In some implementations, the first time may be a smaller one of the subcarrier spacing SCS of the PDCCH and the SCS of the transmission target.

That the scheduling capability information indicates that the terminal does not support the cross-slot scheduling of the control channel and the transmission target may be that the terminal does not support the cross-slot scheduling, that is, the terminal does not support that the control channel is located in a same slot as a data channel or a reference signal scheduled by the control channel, or the terminal does not support that there is an overlap in time domain between a slot in which the control channel is located and a slot in which a data channel or a reference signal scheduled by the control channel is located.

That the terminal has not reported capability information of supporting the cross-slot scheduling of the control channel and the transmission target may be that the terminal has not reported the capability information supporting the cross-slot scheduling of the control channel and the transmission target in a case that the cross-slot scheduling of the control channel and the transmission target is not supported.

That the cross-slot scheduling configuration information indicates that the cross-slot scheduling of the control channel and the transmission target is not configured may be that the cross-slot scheduling is not configured by the network side, that is, the control channel is located in a same slot as a data channel or a reference signal scheduled by the control channel, or there is an overlap in time domain between a slot in which the control channel is located and a slot in which a data channel or a reference signal scheduled by the control channel.

That the transmission mode information indicates that no repeated transmission is performed on the transmission target may be that no repeated transmission is performed on data or a reference signal scheduled by the control channel. That the transmission mode information indicates that no frequency hopping transmission is performed on the transmission target in time domain may be that no frequency hopping transmission is performed, in time domain, on data or a reference signal scheduled by the control channel.

In this implementation, it can be determined that the bandwidth of the second frequency domain resource allocation range is less than or equal to 5 MHz in the fourth condition.

In some implementations, in a fifth condition, the bandwidth of the second frequency domain resource allocation range is less than or equal to 5 MHz, or the bandwidth of the second frequency domain resource allocation range is less than or equal to 20 MHz.

That the bandwidth of the second frequency domain resource allocation range is less than or equal to 5 MHz or that the bandwidth of the second frequency domain resource allocation range is less than or equal to 20 MHz in the fifth condition may be understood as follows: In the fifth condition, the terminal considers or expects that the resource allocation range of the transmission target in frequency domain may be greater than 5 MHz.

The fifth condition may include at least one of the following:

a CSS corresponding to the control channel is a CSS for scheduling a target SIB, the third control resource set is a control resource set for a transmission of the target system information block SIB, and a bandwidth of the frequency domain resource allocation range of the third control resource set is greater than 5 MHz, where the target SIB includes a SIB 1;

the time domain interval is greater than or equal to a first time, where the first time is a time required by the terminal to demodulate the PDCCH;

the scheduling capability information indicates that the terminal supports the cross-slot scheduling of the control channel and the transmission target;

the cross-slot scheduling configuration information indicates that the cross-slot scheduling of the control channel and the transmission target is configured;

the transmission mode information indicates that repeated transmissions are performed on the transmission target, and a bandwidth of a frequency domain resource range of a single nominal transmission or a single actual transmission is less than or equal to 5 MHz;

the transmission mode information indicates that a TB transmission over multiple slots (TB processing over multiple slots) is performed on the transmission target, and a bandwidth of a frequency domain resource range of a transmission in a single slot is less than or equal to 5 MHz; and

the transmission mode information indicates that frequency hopping transmission is performed on the transmission target in time domain, and a bandwidth of a frequency domain resource range of a transmission in each hop is less than or equal to 5 MHz.

That a bandwidth of the frequency domain resource allocation range of the third control resource set is greater than 5 MHz may be that a resource allocation range of a CORESET 0 associated with a Type0 CSS of the control channel in frequency domain is greater than 5 MHz.

That the time domain interval is greater than or equal to a first time may be that a time between a last OFDM symbol on which the PDCCH received by the terminal on the control channel is located and a first OFDM symbol on which the transmission target is located is greater than or equal to the first time.

For the first time, refer to the corresponding descriptions in the foregoing implementation. The details are not described herein again.

That the scheduling capability information indicates that the terminal supports the cross-slot scheduling of the control channel and the transmission target may be that the terminal supports a capability that the control channel and the received transmission target are not in a same slot, or there is no overlap in time domain between a slot in which the control channel is located and a slot in which the transmission target is located.

That the cross-slot scheduling configuration information indicates that the cross-slot scheduling of the control channel and the transmission target is configured may be that the cross-slot scheduling is configured by the network side, that is, the control channel is not located in a same slot as the transmission target, or there is no overlap in time domain between a slot in which the control channel is located and a slot in which the transmission target is located.

In some implementations, frequency domain resources of frequency domain resource ranges of different nominal transmissions or different actual transmissions are different; and/or

frequency domain resources of frequency domain resource ranges of transmissions in different slots are different; and/or

frequency domain resources of frequency domain resource ranges of transmissions in different hops are different.

For example, repeated transmissions are performed on the transmission target or a TB transmission over multiple slots (TB processing over multiple slots) is performed on the transmission target, and a frequency domain resource range allocated for a single nominal repetition transmission, a single actual repetition transmission, or a single slot is not greater than 5 MHz, but frequency domain resource ranges of different nominal repetition transmissions, different actual repetition transmissions, or different slots may be different 5 MHz.

For another example, frequency hopping transmission is performed on the transmission target in time domain, and a frequency domain resource range allocated to the transmission in each hop is not greater than 5 MHz, but frequency domain resource ranges of different frequency hops may be different 5 MHz.

In an optional implementation, the method further includes:

determining, by the terminal, a frequency domain position of the second frequency domain resource allocation range according to reference information. The reference information includes at least one of the following:

a frequency domain resource boundary of a fourth control resource set for scheduling a target SIB, where the target SIB includes a SIB 1;
a frequency domain resource boundary of an active bandwidth part BWP;
a frequency domain resource boundary of an initial BWP;
a frequency domain resource boundary at which the control channel is located;
a frequency domain resource boundary configured by a network side; and
index information of the transmission target.

In some implementations, the determining a frequency domain position of the second frequency domain resource allocation range may be determining a frequency domain start position of the second frequency domain resource allocation range. In this way, a specific frequency domain position of the second frequency domain resource allocation range can be determined based on the start position and the bandwidth.

In some implementations, the determining a frequency domain position of the second frequency domain resource allocation range may be determining a frequency domain end position of the second frequency domain resource allocation range. In this way, a specific frequency domain position of the second frequency domain resource allocation range can be determined based on the end position and the bandwidth.

In some implementations, the determining a frequency domain position of the second frequency domain resource allocation range may be determining a discrete frequency domain position of the second frequency domain resource allocation range.

It should be noted that in this embodiment of this application, it is not limited that the terminal determines the frequency domain position of the second frequency domain resource allocation range according to the reference information. For example, in some implementations, a correspondence between a bandwidth and a frequency domain position may be pre-configured, that is, after the bandwidth of the second frequency domain resource allocation range is determined, the frequency domain position of the second frequency domain resource allocation range may be directly determined according to the bandwidth.

In some implementations, the fourth control resource set includes a control resource set including a CSS for scheduling the target SIB, where the target SIB includes the SIB 1.

The CSS for scheduling the target SIB may be a CSS set (CSS set), for example, a Type0-PDCCH CSS set. The fourth control resource set may be a CORESET 0 in which the Type0-PDCCH CSS set is located.

In some implementations, the frequency domain resource boundary at which the control channel is located includes at least one of the following: a frequency domain resource boundary at which a PDCCH received on the control channel is located and a frequency domain resource boundary of a control resource set at which the PDCCH received on the control channel is located.

In some implementations, the frequency domain resource boundary includes a start PRB or an end PRB.

For example, when the terminal considers or expects that the resource allocation range of the transmission target in frequency domain is not greater than 5 MHz, the terminal determines a specific position of the 5 MHz range (that is, a start PRB of the 5 MHz is a target PRB) according to at least one of the following:

a start PRB or an end PRB of the CORESET0 in which the Type0-PDCCH CSS set is located;
a start PRB or an end PRB of an activated or initial BWP;
a start PRB or an end PRB in which a detected PDCCH scheduling the transmission target is located; and
a start PRB or an end PRB of a CORESET in which a detected PDCCH scheduling the transmission target is located.

For example, the start position (for example, the target PRB) of the second frequency domain resource allocation range is equal to the start PRB in any one of the foregoing descriptions. Alternatively, the start position (for example, the target PRB) of the second frequency domain resource allocation range is equal to the start PRB in any one of the foregoing descriptions plus an $RB_{offset}$.

Alternatively, the start position (for example, the target PRB) of the second frequency domain resource allocation range is equal to the end PRB in any one of the foregoing descriptions minus $\dfrac{24}{2^{\mu}}$ plus 1. For a 15 KHz SCS, $\mu = 0$. For a 30 KHz SCS, $\mu = 1$.

The $RB_{offset}$ is a resource block (Resource block, RB) offset, and may be specifically defined in a protocol or configured on a network side. The $RB_{offset}$ may be equal to $\dfrac{24}{2^{\mu}}$.

The frequency domain resource boundary configured by the network side may be a value range of the frequency domain resource boundary configured by the network side. For example, the network side configures at least one of the following frequency domain resource boundaries:

a value range of a first target PRB is

$$[[\ RB_{start},\ \lfloor RB_{start} +$$

$$CORESET\ 0\ BW\ (24,48,96) - \frac{24}{2^{\mu}}\rfloor]]\ ;$$

and

a value range of a second target PRB is $[(\ RB_{start} +$

$$\frac{24}{2^{\mu}}\ ),$$

$$\lfloor CORESET\ 0\ BW\ (24,48,96) - 1]]\ ,$$

where $RB_{start}$ is a start PRB of CORESET0, and $\mu$ = 0, 1, where

$CORESET\ 0\ BW\ (24,48,96)$ indicates that a bandwidth of the $CORESET\ 0$ is one of 24, 48, and 96.

In some optional implementation, the index information of the transmission target may include at least one of the following:

a time domain index of the transmission target, a frequency hopping quantity index of the transmission target, and a transmission quantity index of the transmission target.

The time domain index may be an index $n_s$ of at least one of a sub-slot (sub-slot), a slot (slot), or a subframe in which the transmission target is located. The transmission quantity index of the transmission target may be a quantity index n of nominal or actual repetition transmissions of the transmission target.

In this implementation, different frequency domain positions of the second frequency domain resource allocation range can be determined according to different indexes, and the frequency domain start position of the second frequency domain resource allocation range can be specifically determined. For example, different start PRBs are determined according to different indexes.

In some implementations, in a case that the time domain index, the frequency hopping quantity index, or the transmission quantity index is an even number, a start PRB of the second frequency domain resource allocation range is the start PRB.

In some implementations, in a case that the time domain index, the frequency hopping quantity index, or the transmission quantity index is an odd number, a start PRB of the second frequency domain resource allocation range is the start PRB plus a resource block RB offset. Alternatively, in a case that the time domain index, the frequency hopping quantity index, or the transmission quantity index is an odd number, a start PRB of the second frequency domain resource allocation range is determined based on the end PRB.

For example, if an index $n_s$ of a slot satisfies $mod(n_s/2) = 0$, or the frequency hopping quantity index i satisfies $mod(i/2) = 0$, or the quantity index n of the nominal/actual repetition transmissions satisfies $mod(n/2) = 0$, a value of the first target PRB in the slot, the frequency hopping, or the nominal/actual repetition transmission is the start PRB described above.

For another example, if an index $n_s$ of a slot satisfies $mod(n_s/2) = 1$, or the frequency hopping quantity index i satisfies $mod(i/2) = 1$, or the quantity index n of the nominal/actual repeated transmissions satisfies $mod(n/2) = 1$, a value of the first target PRB in the slot, the frequency hopping, or the nominal/actual repetition transmission is the start PRB described above plus the

$RB_{offset}$ or is the end PRB described above minus $\frac{24}{2^{\mu}}$ plus 1, where $\mu$ = 0, 1.

Because the frequency domain positions of the second frequency domain resource allocation range are determined according to the reference information, the terminal can learn frequency domain positions (for example, learn which 5 MHz is used for transmission) in advance. In this way, the terminal can relax a buffer requirement of the terminal, and power can be saved.

An embodiment is as follows:

For example, an SCS of the CORESET 0 is 30 KHz, a bandwidth thereof is greater than 5 MHz, and an aggregation level (Aggregation Level, AL) of the detected PDCCH is equal to 8. For a SIB 1 PDSCH scheduled by the CORESET 0, if the terminal can learn where/in which 5 MHz the SIB 1 is to be transmitted, a buffer requirement of the terminal can be relaxed, and power can be saved.

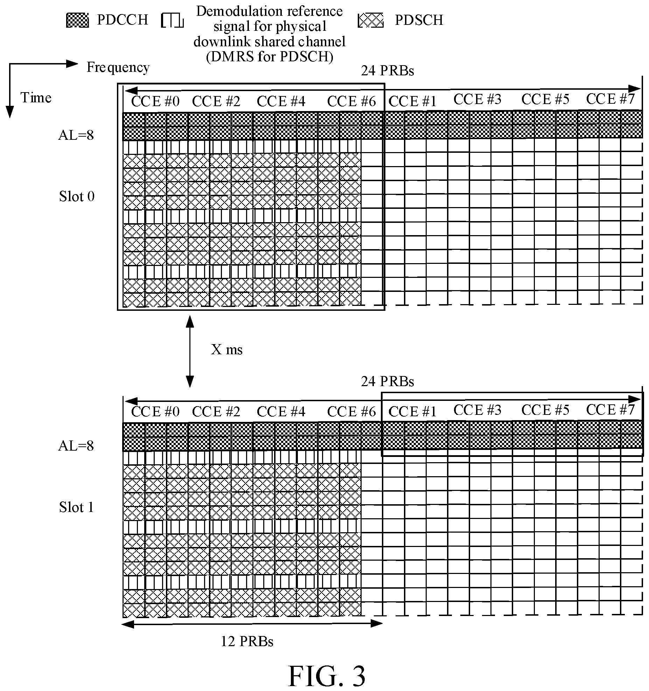

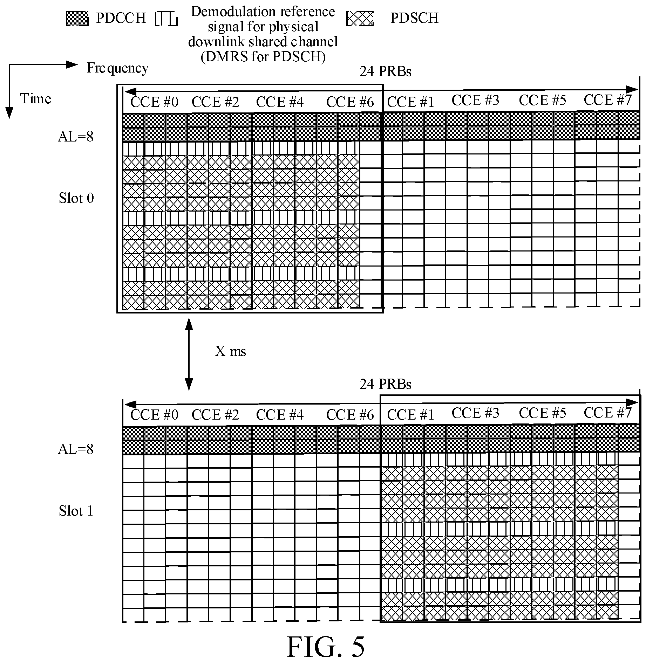

In a scenario shown in FIG. 3, 5 MHz of the SIB 1 is scheduled, and a start PRB thereof is the start PRB of the CORESET 0. The terminal receives the SIB 1 PDSCH in a slot 0. The terminal does not need to receive the SIB 1 PDSCH in a slot 1.

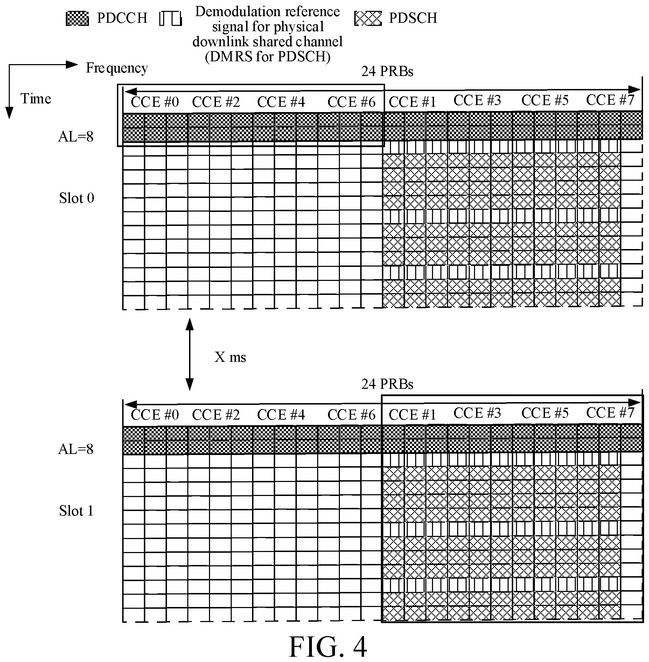

In a scenario shown in FIG. 4, 5 MHz of the SIB 1 is scheduled, and a start PRB thereof is the end PRB of the CORESET 0 minus $\frac{24}{2^{\mu=1}}$ plus 1, that is, 23 - 12 + 1 = 12. The terminal does not receive the SIB 1 PDSCH in a slot 0. The terminal receives the SIB 1 PDSCH in a slot 1.

In a scenario shown in FIG. 5, 5 MHz of the SIB 1 is scheduled, and a start PRB thereof in a slot 0 is the start PRB of the CORESET 0; and in a slot 1 is the end PRB of the CORESET 0 minus $\frac{24}{2^{\mu=1}}$ plus 1, that is, 23 - 12 + 1 = 12. The terminal receives the SIB 1 PDSCH in both the slot 0 and the slot 1.

In an optional implementation, the method further includes:

receiving, by the terminal, transmissions on a target resource, and storing all the received transmissions. A frequency domain resource of the target resource includes the second frequency domain resource range. A time domain resource of the target resource includes at least Y symbols, where Y is a positive integer.

The transmission may be downlink transmission, which may be downlink data transmission such as a PDSCH, or may be downlink signaling such as a SIB 1 or a PDCCH.

That the terminal receives transmissions on the target resource and stores all the received transmissions may be that the terminal receives all transmissions on the target resource and stores all the received transmissions. For example, when the terminal receives or detects a potential PDCCH in the slot ns, the terminal receives all transmissions on the target resource, and stores all the received transmissions.

In some implementations, a start position of the second frequency domain resource range is a start PRB of a control resource set in which a PDCCH that the terminal needs to receive is located, or a start position of the second frequency domain resource range is a start PRB of an active BWP or an initial BWP, where the active BWP or the initial BWP includes all or some resources of a control resource set in which a PDCCH that the terminal needs to receive is located.

The control resource set in which the PDCCH that the terminal needs to receive is located may be a control resource set in which the PDCCH detected by the terminal is located. The PDCCH that the terminal needs to receive may also be referred to as a PDCCH that the terminal needs to detect.

For example, the terminal receives and stores all transmissions of 5 MHz in frequency domain. A start position of the 5 MHz is a start PRB of a CORESET in which the PDCCH detected by the terminal is located, or a start PRB of an active BWP or an initial BWP. The active BWP or the initial BWP includes all or some of frequency domain resources of the CORESET in which the PDCCH that needs to be detected is located.

In some implementations, a start position of the Y symbols is a first symbol or a last symbol on which a PDCCH received on the control channel is located. A value of Y is equal to a quantity of symbols required for the terminal to demodulate the PDCCH, or a value of Y is equal to a symbol index of the first symbol on which the PDCCH is located -1 subtracted from a quantity of symbols in one slot.

For example, the terminal receives and stores at least Y symbols in time domain. The start position of the Y symbols corresponds to the first or the last OFDM symbol where a PDCCH is detected on the control channel. A value of Y is all OFDM symbols in one slot. Alternatively, a value of Y is a quantity of symbols in one slot minus a symbol index of a first symbol on which the PDCCH is located -1. Alternatively, a value of Y is determined by the first time described in the foregoing implementation, that is, a time required for the terminal to demodulate the PDCCH.

Because the terminal receives transmissions on the target resource and stores all the received transmissions, it can be ensured that the terminal can receive transmissions corresponding to the terminal.

An embodiment is as follows:

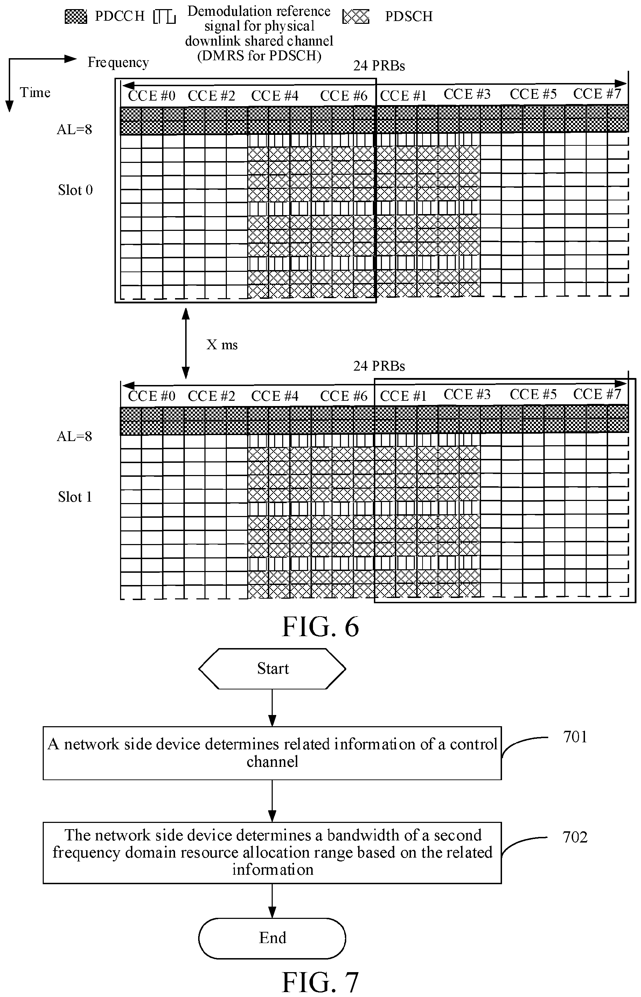

For example, an SCS of the CORESET 0 is 30 KHz, a bandwidth thereof is greater than 5 MHz, and an aggregation level AL of the detected PDCCH is equal to 8. For a SIB 1 PDSCH scheduled by the CORESET 0, as shown in FIG. 6, if UE does not learn where/in which 5 MHz the SIB 1 is to be transmitted, the terminal needs to receive and store all transmissions of 5 MHz in frequency domain on all OFDM symbols within a slot 0 and a slot 1.

In this embodiment of this application, a terminal determines related information of a control channel, where the related information of the control channel includes at least one of the following: a first frequency domain resource allocation range of the control channel, a time domain parameter of the control channel, and scheduling information of the control channel; and the terminal determines a bandwidth of a second frequency domain resource allocation range based on the related information, where the second frequency domain resource allocation range is a frequency domain resource allocation range of a transmission target, the transmission target is an object to be transmitted or received by the terminal based on the received control channel, and the transmission target includes at least one of a channel and a signal. The bandwidth of the second frequency domain resource allocation range is less than or equal to 5 MHz, or the bandwidth of the second frequency domain resource allocation range is less than or equal to 20 MHz. In this way, the bandwidth of the second frequency domain resource allocation range can be determined based on the related information of the control channel. Compared with the related art in which the bandwidth of the frequency domain resource allocation range is fixed, this embodiment of this application can improve flexibility of frequency domain resource allocation.

Refer to FIG. 7. FIG. 7 is a flowchart of another frequency domain resource determining method according to an embodiment of this application. As shown in FIG. 7, the method includes the following steps:

> Step 701: A network side device determines related information of a control channel, where the related information of the control channel includes at least one of the following: a first frequency domain resource allocation range of the control channel, a time domain parameter of the control channel, and scheduling information of the control channel.
> Step 702: The network side device determines a bandwidth of a second frequency domain resource allocation range based on the related information, where the second frequency domain resource allocation range is a frequency domain resource allocation range of a transmission target, the transmission target is an object to be transmitted or received by the network side device based on the transmitted control channel, and the transmission target includes at least one of a channel and a signal.

The bandwidth of the second frequency domain resource allocation range is less than or equal to 5 MHz, or the bandwidth of the second frequency domain resource allocation range is less than or equal to 20 MHz.

Optionally, in a case that a bandwidth of the first frequency domain resource allocation range is less than or equal to 20 MHz, the bandwidth of the second frequency domain resource allocation range is less than or equal to 5 MHz, or the bandwidth of the second frequency domain resource allocation range is less than or equal to 20 MHz; and/or
in a case that a bandwidth of the first frequency domain resource allocation range is less than or equal to 5 MHz, the bandwidth of the second frequency domain resource allocation range is less than or equal to 5 MHz.

Optionally, the first frequency domain resource allocation range includes a frequency domain resource allocation range of a first control resource set associated with the control channel. The first control resource set is a control resource set for scheduling a target system information block SIB. A bandwidth of the frequency domain resource allocation range of the first control resource set is less than or equal to 20 MHz. The target SIB includes a SIB 1.

In a first condition, the second frequency domain resource allocation range is equal to the frequency domain resource allocation range of the first control resource set; and/or
in a second condition, the bandwidth of the second frequency domain resource allocation range is less than or equal to 5 MHz, and/or a start position of the second frequency domain resource allocation range is the same as a start position of the first control resource set.

The first condition includes at least one of the following:

a physical downlink control channel PDCCH is transmitted in a first common search space CSS;
a PDCCH transmitted by the network side device is scrambled by a first radio network temporary identifier RNTI;
a terminal corresponding to the control channel is in an idle state or an inactive state; and
the network side device has not received capability information reported by a terminal indicating that the terminal supports a maximum of 5 MHz.

The first CSS includes at least one of the following:

a CSS for scheduling the target SIB, where the target SIB includes the SIB 1;
a CSS for scheduling another SIB, where the another SIB is a SIB other than the target SIB;
a CSS for transmitting a PDCCH of information 2 MSG2 in a random access procedure;
a CSS for transmitting a PDCCH of information B MSGB in a random access procedure;
a CSS for transmitting a PDCCH of information 4 MSG4 in a random access procedure;
a CSS for transmitting a PDCCH for paging; and
a CSS for transmitting a PDCCH of paging early identification information.

The second condition includes at least one of the following:

a PDCCH is transmitted in a second CSS;
a PDCCH is received in a UE-specific search space USS;
a PDCCH transmitted by the network side device is scrambled by a second RNTI;
a terminal corresponding to the control channel is in a connected state; and
the network side device has received capability information reported by a terminal indicating that the terminal supports a maximum of 5 MHz.

The second CSS includes a CSS for receiving a set of common downlink control information DCI for a terminal.

Optionally, the first frequency domain resource allocation range includes a frequency domain resource allocation range of a second control resource set associated with the control channel. The second control resource set is not used for scheduling a target SIB. A bandwidth of the frequency domain resource allocation range of the second control resource set is less than or equal to 20 MHz. The target SIB includes a SIB 1.

The bandwidth of the second frequency domain resource allocation range is less than or equal to 5 MHz, and/or a start position of the second frequency domain resource allocation range is the same as a start position of the control resource set or a currently active bandwidth part BWP; and/or

in a third condition, the bandwidth of the second frequency domain resource allocation range is less than or equal to 5 MHz, or the bandwidth of the second frequency domain resource allocation range is less than or equal to 20 MHz. The third condition includes:
there is no overlap between a slot in which a PDCCH transmitted by the network side device on the control channel is located and a slot in which the transmission target is located.

Optionally, the first frequency domain resource allocation range includes a frequency domain resource allocation range of a third control resource set associated with the control channel; or

the time domain parameter of the control channel includes a time domain interval between a last time domain symbol on which a PDCCH received by the terminal on the control channel is located and a first time domain symbol, where the first time domain symbol is a first time domain symbol on which the transmission target is located; or
the scheduling information of the control channel includes at least one of the following:

scheduling capability information of a terminal corresponding to the control channel for scheduling the transmission target for the control channel, where the scheduling capability information indicates whether cross-slot scheduling of the control channel and the transmission target is supported;
cross-slot scheduling configuration information of the network side device for scheduling the transmission target for the control channel; and
transmission mode information of the transmission target scheduled by the control channel.

Optionally, in a fourth condition, the bandwidth of the second frequency domain resource allocation range is less than or equal to 5 MHz.
The fourth condition includes at least one of the following:

a CSS corresponding to the control channel is a CSS for scheduling a target SIB, the third control resource set is a control resource set for scheduling the target SIB, and a bandwidth of the frequency domain resource allocation range of the third control resource set is less than or equal to 5 MHz, where the target SIB includes a SIB 1;
the time domain interval is less than or equal to a first time, where the first time is a time required by the terminal to demodulate the PDCCH;
the scheduling capability information indicates that the terminal does not support the cross-slot scheduling of the control channel and the transmission target, or capability information reported by the terminal and supporting the cross-slot scheduling of the control channel and the transmission target has not received;
the cross-slot scheduling configuration information indicates that the cross-slot scheduling of the control channel and the transmission target is not configured;
the transmission mode information indicates that no repeated transmission is performed on the transmission target; and
the transmission mode information indicates that no frequency hopping transmission is performed on the transmission target in time domain.

Optionally, the first time is determined by at least one of the following:

a capability of the terminal;
a physical downlink shared channel PDSCH processing time configured by the network side device;
a physical uplink shared channel PUSCH processing time configured by the network side device; and
a subcarrier spacing SCS of the PDCCH and an SCS of the transmission target.

Optionally, in a fifth condition, the bandwidth of the second frequency domain resource allocation range is less than or equal to 5 MHz, or the bandwidth of the second frequency domain resource allocation range is less than or equal to 20 MHz.
The fifth condition includes at least one of the following:

a CSS corresponding to the control channel is a CSS for scheduling a target SIB, the third control resource set is a control resource set for a transmission of the target system information block SIB, and a bandwidth of the frequency domain resource allocation range of the third control resource set is greater than 5 MHz, where the target SIB includes a SIB 1;
the time domain interval is greater than or equal to a first time, where the first time is a time required by the terminal to demodulate the PDCCH;
the scheduling capability information indicates that the terminal supports the cross-slot scheduling of the control channel and the transmission target;
the cross-slot scheduling configuration information indicates that the cross-slot scheduling of the control channel and the transmission target is configured;
the transmission mode information indicates that repeated transmissions are performed on the transmission target, and a bandwidth of a frequency domain resource range of a single nominal transmission or a single actual transmission is less than or equal to 5 MHz;
the transmission mode information indicates that a TB transmission over multiple slots is performed on the transmission target, and a bandwidth of a frequency domain resource range of a transmission in a single slot is less than or equal to 5 MHz; and
the transmission mode information indicates that frequency hopping transmission is performed on the transmission target in time domain, and a bandwidth of a frequency domain resource range of a transmission in each hop is less than or equal to 5 MHz.

Optionally, frequency domain resources of frequency domain resource ranges of different nominal transmissions or different actual transmissions are different; and/or

frequency domain resources of frequency domain resource ranges of transmissions in different slots are different; and/or
frequency domain resources of frequency domain resource ranges of transmissions in different hops are different.

Optionally, the method further includes:
determining, by the network side device, a frequency domain position of the second frequency domain resource allocation range according to reference information. The reference information includes at least one of the following:

a frequency domain resource boundary of a fourth control resource set for scheduling a target SIB, where the target SIB includes a SIB 1;

a frequency domain resource boundary of an active bandwidth part BWP;

a frequency domain resource boundary of an initial BWP;

a frequency domain resource boundary at which the control channel is located;

a frequency domain resource boundary configured by the network side device; and

index information of the transmission target.

Optionally, the fourth control resource set includes a control resource set including a CSS for scheduling the target SIB, where the target SIB includes the SIB 1; and/or

the frequency domain resource boundary at which the control channel is located includes at least one of the following: a frequency domain resource boundary at which a PDCCH received on the control channel is located and a frequency domain resource boundary of a control resource set at which the PDCCH received on the control channel is located; and/or

the frequency domain resource boundary includes a start physical resource block PRB or an end PRB; and/or

the index information of the transmission target includes at least one of the following:

a time domain index of the transmission target, a frequency hopping quantity index of the transmission target, and a transmission quantity index of the transmission target.

Optionally, in a case that the time domain index, the frequency hopping quantity index, or the transmission quantity index is an even number, a start PRB of the second frequency domain resource allocation range is the start PRB; and/or

in a case that the time domain index, the frequency hopping quantity index, or the transmission quantity index is an odd number, a start PRB of the second frequency domain resource allocation range is the start PRB plus a resource block RB offset; or in a case that the time domain index, the frequency hopping quantity index, or the transmission quantity index is an odd number, a start PRB of the second frequency domain resource allocation range is determined based on the end PRB.

It should be noted that this embodiment serves as an implementation of a network side device corresponding to the embodiment shown in FIG. 2. For a specific implementation of this embodiment, refer to related descriptions in the embodiment shown in FIG. 2. To avoid repeated descriptions, details are not described again in this embodiment.

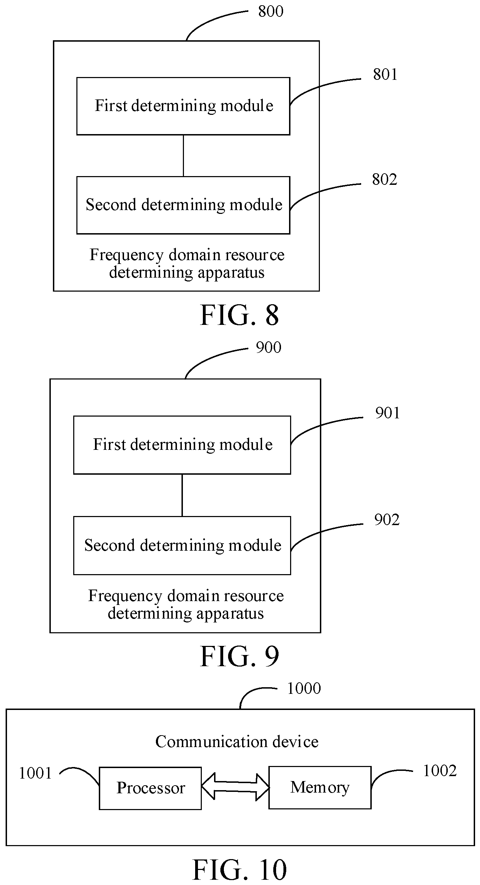

Refer to FIG. 8. FIG. 8 is a structural diagram of a frequency domain resource determining apparatus according to an embodiment of this application. As shown in FIG. 8, the frequency domain resource determining apparatus includes:

a first determining module 801, configured to determine related information of a control channel, where the related information of the control channel includes at least one of the following: a first frequency domain resource allocation range of the control channel, a time domain parameter of the control channel, and scheduling information of the control channel; and

a second determining module 802, configured to determine a bandwidth of a second frequency domain resource allocation range based on the related information, where the second frequency domain resource allocation range is a frequency domain resource allocation range of a transmission target, the transmission target is an object to be transmitted or received by the terminal based on the received control channel, and the transmission target includes at least one of a channel and a signal.

The bandwidth of the second frequency domain resource allocation range is less than or equal to 5 MHz, or the bandwidth of the second frequency domain resource allocation range is less than or equal to 20 MHz.

Optionally, the second frequency domain resource allocation range is a frequency domain resource allocation range of the transmission target considered or expected by the terminal.

Optionally, in a case that a bandwidth of the first frequency domain resource allocation range is less than or equal to 20 MHz, the bandwidth of the second frequency domain resource allocation range is less than or equal to 5 MHz, or the bandwidth of the second frequency domain resource allocation range is less than or equal to 20 MHz; and/or

in a case that the bandwidth of the first frequency domain resource allocation range is less than or equal to 5 MHz, the bandwidth of the second frequency domain resource allocation range is less than or equal to 5 MHz.

Optionally, the first frequency domain resource allocation range includes a frequency domain resource allocation range of a first control resource set associated with the control channel. The first control resource set is a control resource set for scheduling a target system information block SIB. A bandwidth of the frequency domain resource allocation range of the first control resource set is less than or equal to 20 MHz. The target SIB includes a SIB 1.

In a first condition, the second frequency domain resource allocation range is equal to the frequency domain resource allocation range of the first control resource set; and/or

in a second condition, the bandwidth of the second frequency domain resource allocation range is less than or equal to 5 MHz, and/or a start position of the second frequency domain resource allocation range is the same as a start position of the first control resource set.

The first condition includes at least one of the following:

a physical downlink control channel PDCCH is received in a first common search space CSS;
a PDCCH received by the terminal is scrambled by a first radio network temporary identifier RNTI;
the terminal is in an idle state or an inactive state; and the terminal has not reported, to a network side, capability information of the terminal supporting a maximum of 5 MHz.

The first CSS includes at least one of the following:

a CSS for scheduling the target SIB, where the target SIB includes the SIB 1;
a CSS for scheduling another SIB, where the another SIB is a SIB other than the target SIB;
a CSS for receiving a PDCCH of information 2 MSG2 in a random access procedure;
a CSS for receiving a PDCCH of information B MSGB in a random access procedure;
a CSS for receiving a PDCCH of information 4 MSG4 in a random access procedure;
a CSS for receiving a PDCCH for paging; and
a CSS for receiving a PDCCH of paging early identification information.

The second condition includes at least one of the following:

a PDCCH is received in a second CSS;
a PDCCH is received in a UE-specific search space USS;
a PDCCH received by the terminal is scrambled by a second RNTI;
the terminal is in a connected state; and
the terminal reports, to a network side, capability information of the terminal supporting a maximum of 5 MHz.

The second CSS includes a CSS for receiving a set of common downlink control information DCI for the terminal.

Optionally, the first frequency domain resource allocation range includes a frequency domain resource allocation range of a second control resource set associated with the control channel. The second control resource set is not used for scheduling a target SIB. A bandwidth of the frequency domain resource allocation range of the second control resource set is less than or equal to 20 MHz. The target SIB includes a SIB 1.

The bandwidth of the second frequency domain resource allocation range is less than or equal to 5 MHz, and/or a start position of the second frequency domain resource allocation range is the same as a start position of the control resource set or a currently active bandwidth part BWP; and/or

in a third condition, the bandwidth of the second frequency domain resource allocation range is less than or equal to 5 MHz, or the bandwidth of the second frequency domain resource allocation range is less than or equal to 20 MHz. The third condition includes:
there is no overlap between a slot in which a PDCCH received by the terminal on the control channel is located and a slot in which the transmission target is located.

Optionally, the first frequency domain resource allocation range includes a frequency domain resource allocation range of a third control resource set associated with the control channel; or

the time domain parameter of the control channel includes a time domain interval between a last time domain symbol on which a PDCCH received by the terminal on the control channel is located and a first time domain symbol, where the first time domain symbol is a first time domain symbol on which the transmission target is located; or
the scheduling information of the control channel includes at least one of the following:

scheduling capability information of the terminal for scheduling the transmission target for the control channel, where the scheduling capability information indicates whether cross-slot scheduling of the control channel and the transmission target is supported;
cross-slot scheduling configuration information of a network side for scheduling the transmission target for the control channel; and
transmission mode information of the transmission target scheduled by the control channel.

Optionally, in a fourth condition, the bandwidth of the second frequency domain resource allocation range is less than or equal to 5 MHz.

The fourth condition includes at least one of the following:

a CSS corresponding to the control channel is a CSS for scheduling a target SIB, the third control resource set is a control resource set for scheduling the target SIB, a bandwidth of the frequency domain resource allocation range of the third control resource set is less than or equal to 5 MHz, and the target SIB includes a SIB 1;

the time domain interval is less than or equal to a first time, where the first time is a time required by the terminal to demodulate the PDCCH;

the scheduling capability information indicates that the terminal does not support the cross-slot scheduling of the control channel and the transmission target, or the terminal has not reported capability information of supporting the cross-slot scheduling of the control channel and the transmission target;

the cross-slot scheduling configuration information indicates that the cross-slot scheduling of the control channel and the transmission target is not configured;

the transmission mode information indicates that no repeated transmission is performed on the transmission target; and

the transmission mode information indicates that no frequency hopping transmission is performed on the transmission target in time domain.

Optionally, the first time is determined by at least one of the following:

a capability of the terminal;
a physical downlink shared channel PDSCH processing time configured by the network side;
a physical uplink shared channel PUSCH processing time configured by the network side; and
a subcarrier spacing SCS of the PDCCH and an SCS of the transmission target.

Optionally, in a fifth condition, the bandwidth of the second frequency domain resource allocation range is less than or equal to 5 MHz, or the bandwidth of the second frequency domain resource allocation range is less than or equal to 20 MHz.

The fifth condition includes at least one of the following:

a CSS corresponding to the control channel is a CSS for scheduling a target SIB, the third control resource set is a control resource set for a transmission of the target system information block SIB, a bandwidth of the frequency domain resource allocation range of the third control resource set is greater than 5 MHz, and the target SIB includes a SIB 1;

the time domain interval is greater than or equal to a first time, where the first time is a time required by the terminal to demodulate the PDCCH;

the scheduling capability information indicates that the terminal supports the cross-slot scheduling of the control channel and the transmission target;

the cross-slot scheduling configuration information indicates that the cross-slot scheduling of the control channel and the transmission target is configured;

the transmission mode information indicates that repeated transmissions are performed on the transmission target, and a bandwidth of a frequency domain resource range of a single nominal transmission or a single actual transmission is less than or equal to 5 MHz;

the transmission mode information indicates that a TB transmission over multiple slots is performed on the transmission target, and a bandwidth of a frequency domain resource range of a transmission in a single slot is less than or equal to 5 MHz; and

the transmission mode information indicates that frequency hopping transmission is performed on the transmission target in time domain, and a bandwidth of a frequency domain resource range of a transmission in each hop is less than or equal to 5 MHz.

Optionally, frequency domain resources of frequency domain resource ranges of different nominal transmissions or different actual transmissions are different; and/or

frequency domain resources of frequency domain resource ranges of transmissions in different slots are different; and/or
frequency domain resources of frequency domain resource ranges of transmissions in different hops are different.

Optionally, the apparatus further includes:
a third determining module, configured to determine a frequency domain position of the second frequency domain resource allocation range according to reference information. The reference information includes at least one of the following:

a frequency domain resource boundary of a fourth control resource set for scheduling a target SIB, the target SIB including a SIB 1;
a frequency domain resource boundary of an active bandwidth part BWP;
a frequency domain resource boundary of an initial BWP;
a frequency domain resource boundary at which the control channel is located;
a frequency domain resource boundary configured by a network side; and
index information of the transmission target.

Optionally, the fourth control resource set includes: a control resource set including a CSS for scheduling the target SIB, the target SIB including the SIB 1; and/or

the frequency domain resource boundary at which the control channel is located includes at least one of the following: a frequency domain resource boundary at which a PDCCH received on the control channel is located and a frequency domain resource boundary of a control resource set at which the PDCCH received on the control channel is located; and/or

the frequency domain resource boundary includes a start physical resource block PRB or an end PRB; and/or

the index information of the transmission target includes at least one of the following:

a time domain index of the transmission target, a frequency hopping quantity index of the transmission target, and a transmission quantity index of the transmission target.

Optionally, in a case that the time domain index, the frequency hopping quantity index, or the transmission quantity index is an even number, a start PRB of the second frequency domain resource allocation range is the start PRB; and/or

in a case that the time domain index, the frequency hopping quantity index, or the transmission quantity index is an odd number, a start PRB of the second frequency domain resource allocation range is the start PRB plus a resource block RB offset; or in a case that the time domain index, the frequency hopping quantity index, or the transmission quantity index is an odd number, a start PRB of the second frequency domain resource allocation range is determined based on the end PRB.

Optionally, the apparatus further includes:

a receiving module, configured to receive transmissions on a target resource, and store all the received transmissions, where a frequency domain resource of the target resource includes the second frequency domain resource range, and a time domain resource of the target resource includes at least Y symbols, where Y is a positive integer.

Optionally, a start position of the second frequency domain resource range is a start PRB of a control resource set in which a PDCCH that the terminal needs to receive is located, or a start position of the second frequency domain resource range is a start PRB of an active BWP or an initial BWP, where the active BWP or the initial BWP includes all or some resources of a control resource set in which a PDCCH that the terminal needs to receive is located; and/or

a start position of the Y symbols is a first symbol or a last symbol on which a PDCCH received on the control channel is located. A value of Y is equal to a quantity of symbols required for the terminal to demodulate the PDCCH, or a value of Y is equal to a symbol index of the first symbol on which the PDCCH is located -1 subtracted from a quantity of symbols in one slot.

The frequency domain resource determining apparatus can improve flexibility of frequency domain resource allocation.

The frequency domain resource determining apparatus in this embodiment of this application may be an electronic device, for example, an electronic device with an operating system, or may be a component in an electronic device, for example, an integrated circuit or a chip. The electronic device may be a terminal, or may be another device other than a terminal. For example, the terminal may include, but is not limited to, the types of terminals listed in the embodiments of this application, and the another device may be a server, a network attached storage (Network Attached Storage, NAS), or the like. This is not specifically limited in the embodiments of this application.

The frequency domain resource determining apparatus provided in this embodiment of this application can implement the processes implemented in the method embodiment shown in FIG. 2 and achieve the same technical effect. To avoid repetition, details are not described herein again.

Refer to FIG. 9. FIG. 9 is a structural diagram of a frequency domain resource determining apparatus according to an embodiment of this application. As shown in FIG. 9, the frequency domain resource determining apparatus includes:

a first determining module 901, configured to determine related information of a control channel, where the related information of the control channel includes at least one of the following: a first frequency domain resource allocation range of the control channel, a time domain parameter of the control channel, and scheduling information of the control channel; and

a second determining module 902, configured to determine a bandwidth of a second frequency domain resource allocation range based on the related information, where the second frequency domain resource allocation range is a frequency domain resource allocation range of a transmission target. The transmission target is an object to be transmitted or received by the network side device based on the transmitted control channel. The transmission target includes at least one of a channel and a signal.

The bandwidth of the second frequency domain resource allocation range is less than or equal to 5 MHz, or the bandwidth of the second frequency domain resource allocation range is less than or equal to 20 MHz.

Optionally, in a case that a bandwidth of the first frequency domain resource allocation range is less than or equal to 20 MHz, the bandwidth of the second frequency domain resource allocation range is less than or equal to 5 MHz, or the bandwidth of the second frequency domain resource allocation range is less than or equal to 20 MHz; and/or

in a case that a bandwidth of the first frequency domain resource allocation range is less than or equal to 5 MHz, the bandwidth of the second frequency domain resource allocation range is less than or equal to 5 MHz.

Optionally, the first frequency domain resource allocation range includes a frequency domain resource allocation range of a first control resource set associated with the control channel. The first control resource set is a control resource set for scheduling a target system information block SIB. A bandwidth of the frequency domain resource allocation range of the first control resource set is less than or equal to 20 MHz. The target SIB includes a SIB 1.

In a first condition, the second frequency domain resource allocation range is equal to the frequency domain resource allocation range of the first control resource set; and/or

in a second condition, the bandwidth of the second frequency domain resource allocation range is less than or equal to 5 MHz, and/or a start position of the second frequency domain resource allocation range is the same as a start position of the first control resource set.

The first condition includes at least one of the following:

a physical downlink control channel PDCCH is transmitted in a first common search space CSS;
a PDCCH transmitted by the network side device is scrambled by a first radio network temporary identifier RNTI;
a terminal corresponding to the control channel is in an idle state or an inactive state; and
the network side device has not received capability information reported by a terminal indicating that the terminal supports a maximum of 5 MHz.

The first CSS includes at least one of the following:

a CSS for scheduling the target SIB, where the target SIB includes the SIB 1;
a CSS for scheduling another SIB, where the another SIB is a SIB other than the target SIB;
a CSS for transmitting a PDCCH of information 2 MSG2 in a random access procedure;
a CSS for transmitting a PDCCH of information B MSGB in a random access procedure;
a CSS for transmitting a PDCCH of information 4 MSG4 in a random access procedure;
a CSS for transmitting a PDCCH for paging; and
a CSS for transmitting a PDCCH of paging early identification information.

The second condition includes at least one of the following:

a PDCCH is transmitted in a second CSS;
a PDCCH is received in a UE-specific search space USS;
a PDCCH transmitted by the network side device is scrambled by a second RNTI;
a terminal corresponding to the control channel is in a connected state; and
the network side device has received capability information reported by a terminal indicating that the terminal supports a maximum of 5 MHz.

The second CSS includes a CSS for receiving a set of common downlink control information DCI for a terminal.

Optionally, the first frequency domain resource allocation range includes a frequency domain resource allocation range of a second control resource set associated with the control channel. The second control resource set is not used for scheduling a target SIB. A bandwidth of the frequency domain resource allocation range of the second control resource set is less than or equal to 20 MHz. The target SIB includes a SIB 1.

The bandwidth of the second frequency domain resource allocation range is less than or equal to 5 MHz, and/or a start position of the second frequency domain resource allocation range is the same as a start position of the control resource set or a currently active bandwidth part BWP; and/or

in a third condition, the bandwidth of the second frequency domain resource allocation range is less than or equal to 5 MHz, or the bandwidth of the second frequency domain resource allocation range is less than or equal to 20 MHz. The third condition includes:

there is no overlap between a slot in which a PDCCH transmitted by the network side device on the control channel is located and a slot in which the transmission target is located.

Optionally, the first frequency domain resource allocation range includes a frequency domain resource allocation range of a third control resource set associated with the control channel; or

the time domain parameter of the control channel includes a time domain interval between a last time domain symbol on which a PDCCH received by the terminal on the control channel is located and a first time domain symbol, where the first time domain symbol is a first time domain symbol on which the transmission target is located; or
the scheduling information of the control channel includes at least one of the following:

scheduling capability information of a terminal corresponding to the control channel for scheduling the transmission target for the control channel, where the scheduling capability information indicates whether cross-slot scheduling of the control channel and the transmission target is supported;
cross-slot scheduling configuration information of the network side device for scheduling the transmission target for the control channel; and
transmission mode information of the transmission target scheduled by the control channel.

Optionally, in a fourth condition, the bandwidth of the second frequency domain resource allocation range is less than or equal to 5 MHz.

The fourth condition includes at least one of the following:

a CSS corresponding to the control channel is a CSS for scheduling a target SIB, the third control resource set is a control resource set for scheduling the target SIB, a bandwidth of the frequency domain resource allocation range of the third control resource set is less than or equal to 5 MHz, and the target SIB includes a SIB 1;

the time domain interval is less than or equal to a first time, where the first time is a time required by the terminal to demodulate the PDCCH;

the scheduling capability information indicates that the terminal does not support the cross-slot scheduling of the control channel and the transmission target, or capability information reported by the terminal and supporting the cross-slot scheduling of the control channel and the transmission target has not received;

the cross-slot scheduling configuration information indicates that the cross-slot scheduling of the control channel and the transmission target is not configured;

the transmission mode information indicates that no repeated transmission is performed on the transmission target; and

the transmission mode information indicates that no frequency hopping transmission is performed on the transmission target in time domain.

Optionally, the first time is determined by at least one of the following:

a capability of the terminal;

a physical downlink shared channel PDSCH processing time configured by the network side device;

a physical uplink shared channel PUSCH processing time configured by the network side device; and

a subcarrier spacing SCS of the PDCCH and an SCS of the transmission target.

Optionally, in a fifth condition, the bandwidth of the second frequency domain resource allocation range is less than or equal to 5 MHz, or the bandwidth of the second frequency domain resource allocation range is less than or equal to 20 MHz.

The fifth condition includes at least one of the following:

a CSS corresponding to the control channel is a CSS for scheduling a target SIB, the third control resource set is a control resource set for a transmission of the target system information block SIB, and a bandwidth of the frequency domain resource allocation range of the third control resource set is greater than 5 MHz, where the target SIB includes a SIB 1;

the time domain interval is greater than or equal to a first time, where the first time is a time required by the terminal to demodulate the PDCCH;

the scheduling capability information indicates that the terminal supports the cross-slot scheduling of the control channel and the transmission target;

the cross-slot scheduling configuration information indicates that the cross-slot scheduling of the control channel and the transmission target is configured;

the transmission mode information indicates that repeated transmissions are performed on the transmission target, and a bandwidth of a frequency domain resource range of a single nominal transmission or a single actual transmission is less than or equal to 5 MHz;

the transmission mode information indicates that a TB transmission over multiple slots is performed on the transmission target, and a bandwidth of a frequency domain resource range of a transmission in a single slot is less than or equal to 5 MHz; and

the transmission mode information indicates that frequency hopping transmission is performed on the transmission target in time domain, and a bandwidth of a frequency domain resource range of a transmission in each hop is less than or equal to 5 MHz.

Optionally, frequency domain resources of frequency domain resource ranges of different nominal transmissions or different actual transmissions are different; and/or

frequency domain resources of frequency domain resource ranges of transmissions in different slots are different; and/or

frequency domain resources of frequency domain resource ranges of transmissions in different hops are different.

Optionally, the apparatus further includes:

a third determining module, configured to determine a frequency domain position of the second frequency domain resource allocation range according to reference information. The reference information includes at least one of the following:

a frequency domain resource boundary of a fourth control resource set for scheduling a target SIB, the target SIB including a SIB 1;

a frequency domain resource boundary of an active bandwidth part BWP;

a frequency domain resource boundary of an initial BWP;

a frequency domain resource boundary at which the control channel is located;

a frequency domain resource boundary configured by the network side device; and

index information of the transmission target.

Optionally, the fourth control resource set includes a control resource set including a CSS for scheduling the target SIB, the target SIB including the SIB 1; and/or

the frequency domain resource boundary at which the control channel is located includes at least one of the following: a frequency domain resource boundary at which a PDCCH received on the control channel is located and a frequency domain resource boundary of a control resource set at which the PDCCH received on the control channel is located; and/or
the frequency domain resource boundary includes a start physical resource block PRB or an end PRB; and/or
the index information of the transmission target includes at least one of the following:
a time domain index of the transmission target, a frequency hopping quantity index of the transmission target, and a transmission quantity index of the transmission target.

Optionally, in a case that the time domain index, the frequency hopping quantity index, or the transmission quantity index is an even number, a start PRB of the second frequency domain resource allocation range is the start PRB; and/or
in a case that the time domain index, the frequency hopping quantity index, or the transmission quantity index is an odd number, a start PRB of the second frequency domain resource allocation range is the start PRB plus a resource block RB offset; or in a case that the time domain index, the frequency hopping quantity index, or the transmission quantity index is an odd number, a start PRB of the second frequency domain resource allocation range is determined based on the end PRB.

The frequency domain resource determining apparatus can improve flexibility of frequency domain resource allocation.

The frequency domain resource determining apparatus in this embodiment of this application may be an electronic device, for example, an electronic device with an operating system, or may be a component in an electronic device, for example, an integrated circuit or a chip. The electronic device may be a network side device.

The frequency domain resource determining apparatus provided in this embodiment of this application can implement the processes implemented in the method embodiment shown in FIG. 8 and achieve the same technical effect. To avoid repetition, details are not described herein again.

Optionally, as shown in FIG. 10, an embodiment of this application further provides a communication device 1000, including a processor 1001 and a memory 1002. The memory 1002 stores a program or an instruction runnable on the processor 1001. For example, when the communication device 1000 is a terminal, the program or the instruction, when executed by the processor 1001, implements the steps of the embodiment of the frequency domain resource determining method of the terminal side, and the same technical effect can be achieved. When the communication device 1000 is a network side device, the program or the instruction, when executed by the processor 1001, implements the steps of the embodiment of the frequency domain resource determining method of the network side device side, and the same technical effect can be achieved. To avoid repetition, details are not described herein again.

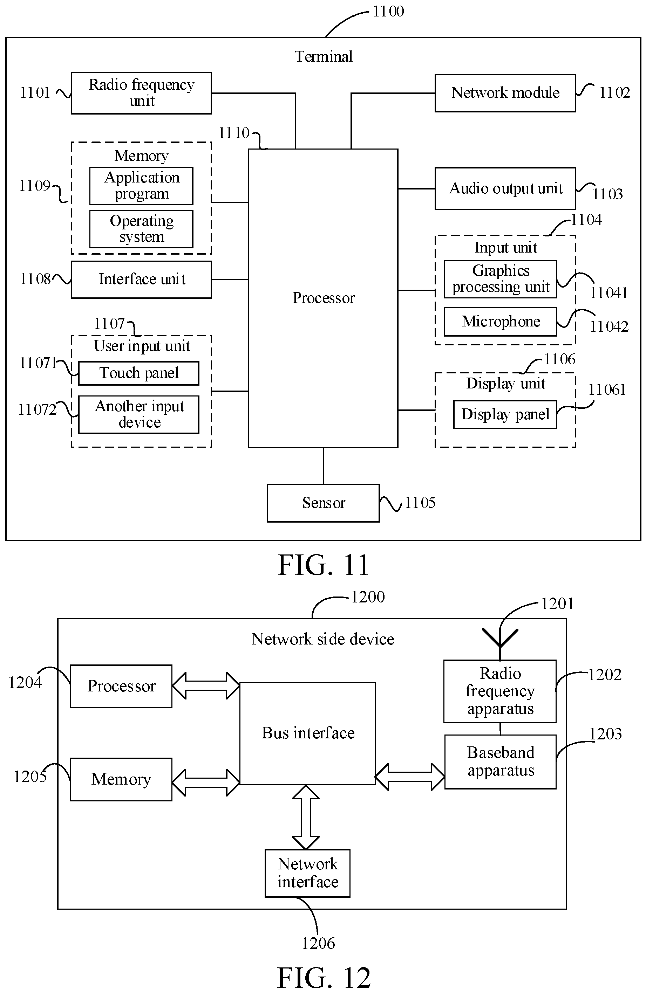

An embodiment of this application further provides a terminal, including a processor and a communication interface. The processor or the communication interface is configured to determine related information of a control channel, where the related information of the control channel includes at least one of the following: a first frequency domain resource allocation range of the control channel, a time domain parameter of the control channel, and scheduling information of the control channel; and determine a bandwidth of a second frequency domain resource allocation range based on the related information. The second frequency domain resource allocation range is a frequency domain resource allocation range of a transmission target. The transmission target is an object to be transmitted or received by the terminal based on the received control channel. The transmission target includes at least one of a channel and a signal. The bandwidth of the second frequency domain resource allocation range is less than or equal to 5 MHz, or the bandwidth of the second frequency domain resource allocation range is less than or equal to 20 MHz. This embodiment of the terminal corresponds to the foregoing method embodiment of the terminal side. Implementation processes and implementations of the foregoing method embodiment are all applicable to this embodiment of the terminal, and the same technical effect can be achieved. Specifically, FIG. 11 is a schematic diagram of a hardware structure of a terminal that implements this embodiment of this application.

The terminal 1100 includes, but is not limited to: at least some components in a radio frequency unit 1101, a network module 1102, an audio output unit 1103, an input unit 1104, a sensor 1105, a display unit 1106, a user input unit 1107, an interface unit 1108, a memory 1109, and a processor 1110.

A person skilled in the art may understand that, the terminal 1100 may further include a power supply (such as a battery) for supplying power to each component. The power supply may be logically connected to the processor 1110 by using a power management system, thereby implementing functions, such as charging, discharging, and power consumption management, by using the power management system. The terminal structure shown in FIG. 11 constitutes no limitation on the terminal, and the terminal may include more or fewer components than those shown in the figure, or some components may be combined, or a different component deployment may be used. Details are not described herein.

It should be understood that in this embodiment of this application, the input unit 1104 may include a graphics processing unit (Graphics Processing Unit, GPU) 11041 and a microphone 11042. The graphics processing unit 11041 processes image data of still pictures or videos captured by an image capture apparatus (such as a camera) in a video capture mode or an image capture mode. The display unit 1106 may include a display panel 11061. The display panel 11061 may be configured in a form of a liquid crystal display, an organic light-emitting diode, or the like. The user input unit 1107 includes at least one of a touch panel 11071 and another input device 11072. The touch panel 11071 is also referred to as a touchscreen. The touch panel 11071 may include two parts: a touch detection apparatus and a touch controller. The another input device 11072 may include, but is not limited to, a physical keyboard, a functional button (such as a sound volume control button or a power button), a trackball, a mouse, or a joystick. Details are not described herein.

In this embodiment of this application, after receiving downlink data from a network side device, the radio frequency unit 1101 may transmit the downlink data to the processor 1110 for processing. In addition, the radio frequency unit 1101 may transmit uplink data to the network side device. Usually, the radio frequency unit 1101 includes, but is not limited to, an antenna, an amplifier, a transceiver, a coupler, a low noise amplifier, a duplexer, and the like.

The memory 1109 may be configured to store a software program or instruction and various data. The memory 1109 may mainly include a first storage area storing a program or an instruction and a second storage area storing data. The first storage area may store an operating system, an application program or an instruction required by at least one function (for example, a sound playing function or an image playing function), and the like. In addition, the memory 1109 may include a volatile memory or a non-volatile memory, or the memory 1109 may include both a volatile memory and a non-volatile memory. The non-volatile memory may be a read-only memory (Read-Only Memory, ROM), a programmable read-only memory (Programmable ROM, PROM), an erasable programmable read-only memory (Erasable PROM, EPROM), an electrically erasable programmable read-only memory (Electrically EPROM, EEPROM), or a flash memory. The volatile memory may be a random access memory (Random Access Memory, RAM), a static random access memory (Static RAM, SRAM), a dynamic random access memory (Dynamic RAM, DRAM), a synchronous dynamic random access memory (Synchronous DRAM, SDRAM), a double data rate synchronous dynamic random access memory (Double Data Rate SDRAM, DDRSDRAM), an enhanced synchronous dynamic random access memory (Enhanced SDRAM, ESDRAM), a synchronous link dynamic random access memory (Synch link DRAM, SLDRAM), and a direct rambus random access memory (Direct Rambus RAM, DRRAM). The memory 1109 in this embodiment of this application includes, but is not limited to, these memories and any other suitable types of memories.

The processor 1110 may include one or more processing units. Optionally, the processor 1110 integrates an application processor and a modem processor. The application processor mainly processes operations related to the operating system, a user interface, the application program, and the like. The modem processor mainly processes a wireless communication signal, and is, for example, a baseband processor. It may be understood that the modem processor may alternatively not be integrated in the processor 1110.

The processor 1110 is configured to determine related information of a control channel, where the related information of the control channel includes at least one of the following: a first frequency domain resource allocation range of the control channel, a time domain parameter of the control channel, and scheduling information of the control channel; and determine a bandwidth of a second frequency domain resource allocation range based on the related information. The second frequency domain resource allocation range is a frequency domain resource allocation range of a transmission target. The transmission target is an object to be transmitted or received by the terminal based on the received control channel. The transmission target includes at least one of a channel and a signal.

The bandwidth of the second frequency domain resource allocation range is less than or equal to 5 MHz, or the bandwidth of the second frequency domain resource allocation range is less than or equal to 20 MHz.

Optionally, the second frequency domain resource allocation range is a frequency domain resource allocation range of the transmission target considered or expected by the terminal.

Optionally, in a case that a bandwidth of the first frequency domain resource allocation range is less than or equal to 20 MHz, the bandwidth of the second frequency domain resource allocation range is less than or equal to 5 MHz, or the bandwidth of the second frequency domain resource allocation range is less than or equal to 20 MHz; and/or

in a case that a bandwidth of the first frequency domain resource allocation range is less than or equal to 5 MHz, the bandwidth of the second frequency domain resource allocation range is less than or equal to 5 MHz.

Optionally, the first frequency domain resource allocation range includes a frequency domain resource allocation range of a first control resource set associated with the control channel. The first control resource set is a control resource set for scheduling a target system information block SIB. A bandwidth of the frequency domain resource allocation range of the first control resource set is less than or equal to 20 MHz. The target SIB includes a SIB 1.

In a first condition, the second frequency domain resource allocation range is equal to the frequency domain resource allocation range of the first control resource set; and/or

in a second condition, the bandwidth of the second frequency domain resource allocation range is less than or equal to 5 MHz, and/or a start position of the second frequency domain resource allocation range is the same as a start position of the first control resource set.

The first condition includes at least one of the following:

a physical downlink control channel PDCCH is received in a first common search space CSS;
a PDCCH received by the terminal is scrambled by a first radio network temporary identifier RNTI;
the terminal is in an idle state or an inactive state; and
the terminal has not reported, to a network side, capability information of the terminal supporting a maximum of 5 MHz.

The first CSS includes at least one of the following:

a CSS for scheduling the target SIB, where the target SIB includes the SIB 1;
a CSS for scheduling another SIB, where the another SIB is a SIB other than the target SIB;
a CSS for receiving a PDCCH of information 2 MSG2 in a random access procedure;
a CSS for receiving a PDCCH of information B MSGB in a random access procedure;
a CSS for receiving a PDCCH of information 4 MSG4 in a random access procedure;
a CSS for receiving a PDCCH for paging; and
a CSS for receiving a PDCCH of paging early identification information.

The second condition includes at least one of the following:

a PDCCH is received in a second CSS;
a PDCCH is received in a UE-specific search space USS;
a PDCCH received by the terminal is scrambled by a second RNTI;
the terminal is in a connected state; and
the terminal reports, to a network side, capability information of the terminal supporting a maximum of 5 MHz.

The second CSS includes a CSS for receiving a set of common downlink control information DCI for the terminal.

Optionally, the first frequency domain resource allocation range includes a frequency domain resource allocation range of a second control resource set associated with the control channel. The second control resource set is not used for scheduling a target SIB. A bandwidth of the frequency domain resource allocation range of the second control resource set is less than or equal to 20 MHz. The target SIB includes a SIB 1.

The bandwidth of the second frequency domain resource allocation range is less than or equal to 5 MHz, and/or a start position of the second frequency domain resource allocation range is the same as a start position of the control resource set or a currently active bandwidth part BWP; and/or

in a third condition, the bandwidth of the second frequency domain resource allocation range is less than or equal to 5 MHz, or the bandwidth of the second frequency domain resource allocation range is less than or equal to 20 MHz. The third condition includes:

there is no overlap between a slot in which a PDCCH received by the terminal on the control channel is located and a slot in which the transmission target is located.

Optionally, the first frequency domain resource allocation range includes a frequency domain resource allocation range of a third control resource set associated with the control channel; or

the time domain parameter of the control channel includes a time domain interval between a last time domain symbol on which a PDCCH received by the terminal on the control channel is located and a first time domain symbol, where the first time domain symbol is a first time domain symbol on which the transmission target is located; or
the scheduling information of the control channel includes at least one of the following:

scheduling capability information of the terminal for scheduling the transmission target for the control channel, where the scheduling capability information indicates whether cross-slot scheduling of the control channel and the transmission target is supported;
cross-slot scheduling configuration information of a network side for scheduling the transmission target for the control channel; and
transmission mode information of the transmission target scheduled by the control channel.

Optionally, in a fourth condition, the bandwidth of the second frequency domain resource allocation range is less than or equal to 5 MHz.

The fourth condition includes at least one of the following:

a CSS corresponding to the control channel is a CSS for scheduling a target SIB, the third control resource set is a control resource set for scheduling the target SIB, and a bandwidth of the frequency domain resource allocation range of the third control resource set is less than or equal to 5 MHz, where the target SIB includes a SIB 1;

the time domain interval is less than or equal to a first time, where the first time is a time required by the terminal to demodulate the PDCCH;

the scheduling capability information indicates that the terminal does not support the cross-slot scheduling of the control channel and the transmission target, or the terminal has not reported capability information of supporting the cross-slot scheduling of the control channel and the transmission target;

the cross-slot scheduling configuration information indicates that the cross-slot scheduling of the control channel and the transmission target is not configured;

the transmission mode information indicates that no repeated transmission is performed on the transmission target; and

the transmission mode information indicates that frequency hopping transmission is not performed on the transmission target in time domain.

Optionally, the first time is determined by at least one of the following:

a capability of the terminal;
a physical downlink shared channel PDSCH processing time configured by the network side;
a physical uplink shared channel PUSCH processing time configured by the network side; and
a subcarrier spacing SCS of the PDCCH and an SCS of the transmission target.

Optionally, in a fifth condition, the bandwidth of the second frequency domain resource allocation range is less than or equal to 5 MHz, or the bandwidth of the second frequency domain resource allocation range is less than or equal to 20 MHz.

The fifth condition includes at least one of the following:

a CSS corresponding to the control channel is a CSS for scheduling a target SIB, the third control resource set is a control resource set for a transmission the target system information block SIB, and a bandwidth of the frequency domain resource allocation range of the third control resource set is greater than 5 MHz, where the target SIB includes a SIB 1;

the time domain interval is greater than or equal to a first time, where the first time is a time required by the terminal to demodulate the PDCCH;

the scheduling capability information indicates that the terminal supports the cross-slot scheduling of the control channel and the transmission target;

the cross-slot scheduling configuration information indicates that the cross-slot scheduling of the control channel and the transmission target is configured;

the transmission mode information indicates that repeated transmissions are performed on the transmission target, and a bandwidth of a frequency domain resource range of a single nominal transmission or a single actual transmission is less than or equal to 5 MHz;

the transmission mode information indicates that a TB transmission over multiple slots is performed on the transmission target, and a bandwidth of a frequency domain resource range of a transmission in a single slot is less than or equal to 5 MHz; and

the transmission mode information indicates that frequency hopping transmission is performed on the transmission target in time domain, and a bandwidth of a frequency domain resource range of a transmission in each hop is less than or equal to 5 MHz.

Optionally, frequency domain resources of frequency domain resource ranges of different nominal transmissions or different actual transmissions are different; and/or

frequency domain resources of frequency domain resource ranges of transmissions in different slots are different; and/or
frequency domain resources of frequency domain resource ranges of transmissions in different hops are different.

Optionally, the processor 1110 is further configured to:

determine a frequency domain position of the second frequency domain resource allocation range according to reference information. The reference information includes at least one of the following:

a frequency domain resource boundary of a fourth control resource set for scheduling a target SIB, where the target SIB includes a SIB 1;

a frequency domain resource boundary of an active bandwidth part BWP;

a frequency domain resource boundary of an initial BWP;

a frequency domain resource boundary at which the control channel is located;

a frequency domain resource boundary configured by a network side; and

index information of the transmission target.

Optionally, the fourth control resource set includes a control resource set including a CSS for scheduling the target SIB, the target SIB including the SIB 1; and/or

the frequency domain resource boundary at which the control channel is located includes at least one of the following: a frequency domain resource boundary at which a PDCCH received on the control channel is located and a frequency domain resource boundary of a control resource set at which the PDCCH received on the control channel is located; and/or

the frequency domain resource boundary includes a start physical resource block PRB or an end PRB; and/or

the index information of the transmission target includes at least one of the following:

a time domain index of the transmission target, a frequency hopping quantity index of the transmission target, and a transmission quantity index of the transmission target.

Optionally, in a case that the time domain index, the frequency hopping quantity index, or the transmission quantity index is an even number, a start PRB of the second frequency domain resource allocation range is the start PRB; and/or

in a case that the time domain index, the frequency hopping quantity index, or the transmission quantity index is an odd number, a start PRB of the second frequency domain resource allocation range is the start PRB plus a resource block RB offset; or in a case that the time domain index, the frequency hopping quantity index, or the transmission quantity index is an odd number, a start PRB of the second frequency domain resource allocation range is determined based on the end PRB.

Optionally, the radio frequency unit 1101 is configured to:

receive transmissions on a target resource, and store all the received transmissions. A frequency domain resource of the target resource includes the second frequency domain resource range. A time domain resource of the target resource includes at least Y symbols, where Y is a positive integer.

Optionally, a start position of the second frequency domain resource range is a start PRB of a control resource set in which a PDCCH that the terminal needs to receive is located, or a start position of the second frequency domain resource range is a start PRB of an active BWP or an initial BWP, where the active BWP or the initial BWP includes all or some resources of a control resource set in which a PDCCH that the terminal needs to receive is located; and/or

a start position of the Y symbols is a first symbol or a last symbol on which a PDCCH received on the control channel is located. A value of Y is equal to a quantity of symbols required for the terminal to demodulate the PDCCH, or a value of Y is equal to a symbol index of the first symbol on which the PDCCH is located -1 subtracted from a quantity of symbols in one slot.

The foregoing terminal can improve flexibility of frequency domain resource allocation.

An embodiment of this application further provides a network side device, including a processor and a communication interface. The processor or the communication interface is configured to determine related information of a control channel, where the related information of the control channel includes at least one of the following: a first frequency domain resource allocation range of the control channel, a time domain parameter of the control channel, and scheduling information of the control channel; and determine a bandwidth of a second frequency domain resource allocation range based on the related information. The second frequency domain resource allocation range is a frequency domain resource allocation range of a transmission target. The transmission target is an object to be transmitted or received by the network side device based on the transmitted control channel. The transmission target includes at least one of a channel and a signal. The bandwidth of the second frequency domain resource allocation range is less than or equal to 5 MHz, or the bandwidth of the second frequency domain resource allocation range is less than or equal to 20 MHz. This embodiment of the network side device corresponds to the method embodiment of the network side device side. Implementation processes and implementations of the method embodiment are all applicable to this embodiment of the network side device, and the same technical effect can be achieved.

Specifically, an embodiment of this application further provides a network side device. As shown in FIG. 12, the network side device 1200 includes: an antenna 1201, a radio frequency apparatus 1202, a baseband apparatus 1203, a processor 1204, and a memory 1205. The antenna 1201 is connected to the radio frequency apparatus 1202. In an uplink direction, the radio frequency apparatus 1202 receives information through the antenna 1201, and transmits the received information to the baseband apparatus 1203 for processing. In a downlink direction, the baseband apparatus 1203 processes and transmits to-be-transmitted information to the radio frequency apparatus 1202. The radio frequency apparatus 1202 processes received information and transmits the information through the antenna 1201.

The method performed by the network side device in the foregoing embodiment may be implemented in the baseband apparatus 1203. The baseband apparatus 1203 includes a baseband processor.

The baseband apparatus 1203 may include, for example, at least one baseband board. A plurality of chips are disposed on the baseband board. As shown in FIG. 12, one chip is, for example, the baseband processor, and is connected to the memory 1205 through a bus interface, to call a program in the memory 1205 to perform the operations of the network device shown in the foregoing method embodiment.

The network side device may further include a network interface 1206. The interface is, for example, a common public radio interface (common public radio interface, CPRI).

Specifically, the network side device 1200 of this embodiment of the present invention further includes: an instruction or a program stored in the memory 1205 and runnable on the processor 1204. The processor 1204 calls the instruction or the program in the memory 1205 to perform the method performed by each module shown in FIG. 9, and the same technical effect is achieved. To avoid repetition, details are not described herein again.

The processor 1204 is configured to determine related information of a control channel, where the related information of the control channel includes at least one of the following: a first frequency domain resource allocation range of the control channel, a time domain parameter of the control channel, and scheduling information of the control channel; and determine a bandwidth of a second frequency domain resource allocation range based on the related information. The second frequency domain resource allocation range is a frequency domain resource allocation range of a transmission target. The transmission target is an object to be transmitted or received by the network side device based on the transmitted control channel. The transmission target includes at least one of a channel and a signal.

The bandwidth of the second frequency domain resource allocation range is less than or equal to 5 MHz, or the bandwidth of the second frequency domain resource allocation range is less than or equal to 20 MHz.

Optionally, in a case that a bandwidth of the first frequency domain resource allocation range is less than or equal to 20 MHz, the bandwidth of the second frequency domain resource allocation range is less than or equal to 5 MHz, or the bandwidth of the second frequency domain resource allocation range is less than or equal to 20 MHz; and/or
in a case that a bandwidth of the first frequency domain resource allocation range is less than or equal to 5 MHz, the bandwidth of the second frequency domain resource allocation range is less than or equal to 5 MHz.

Optionally, the first frequency domain resource allocation range includes a frequency domain resource allocation range of a first control resource set associated with the control channel. The first control resource set is a control resource set for scheduling a target system information block SIB. A bandwidth of the frequency domain resource allocation range of the first control resource set is less than or equal to 20 MHz. The target SIB includes a SIB 1.

In a first condition, the second frequency domain resource allocation range is equal to the frequency domain resource allocation range of the first control resource set; and/or
in a second condition, the bandwidth of the second frequency domain resource allocation range is less than or equal to 5 MHz, and/or a start position of the second frequency domain resource allocation range is the same as a start position of the first control resource set.

The first condition includes at least one of the following:

a physical downlink control channel PDCCH is transmitted in a first common search space CSS;
a PDCCH transmitted by the network side device is scrambled by a first radio network temporary identifier RNTI;
a terminal corresponding to the control channel is in an idle state or an inactive state; and
the network side device has not received capability information reported by a terminal indicating that the terminal supports a maximum of 5 MHz.

The first CSS includes at least one of the following:

a CSS for scheduling the target SIB, where the target SIB includes the SIB 1;
a CSS for scheduling another SIB, where the another SIB is a SIB other than the target SIB;
a CSS for transmitting a PDCCH of information 2 MSG2 in a random access procedure;
a CSS for transmitting a PDCCH of information B MSGB in a random access procedure;
a CSS for transmitting a PDCCH of information 4 MSG4 in a random access procedure;
a CSS for transmitting a PDCCH for paging; and
a CSS for transmitting a PDCCH of paging early identification information.

The second condition includes at least one of the following:

a PDCCH is transmitted in a second CSS;
a PDCCH is received in a UE-specific search space USS;
a PDCCH transmitted by the network side device is scrambled by a second RNTI;
a terminal corresponding to the control channel is in a connected state; and
the network side device has received capability information reported by a terminal indicating that the terminal supports a maximum of 5 MHz.

The second CSS includes a CSS for receiving a set of common downlink control information DCI for a terminal.

Optionally, the first frequency domain resource allocation range includes a frequency domain resource allocation range of a second control resource set associated with the control channel. The second control resource set is not used for scheduling a target SIB. A bandwidth of the frequency domain resource allocation range of the second control resource set is less than or equal to 20 MHz. The target SIB includes a SIB 1.

The bandwidth of the second frequency domain resource allocation range is less than or equal to 5 MHz, and/or a start position of the second frequency domain resource allocation range is the same as a start position of the control resource set or a currently active bandwidth part BWP; and/or

in a third condition, the bandwidth of the second frequency domain resource allocation range is less than or equal to 5 MHz, or the bandwidth of the second frequency domain resource allocation range is less than or equal to 20 MHz. The third condition includes:
there is no overlap between a slot in which a PDCCH transmitted by the network side device on the control channel is located and a slot in which the transmission target is located.

Optionally, the first frequency domain resource allocation range includes a frequency domain resource allocation range of a third control resource set associated with the control channel; or

the time domain parameter of the control channel includes a time domain interval between a last time domain symbol on which a PDCCH received by the terminal on the control channel is located and a first time domain symbol, where the first time domain symbol is a first time domain symbol on which the transmission target is located; or
the scheduling information of the control channel includes at least one of the following:

scheduling capability information of a terminal corresponding to the control channel for scheduling the transmission target for the control channel, where the scheduling capability information indicates whether cross-slot scheduling of the control channel and the transmission target is supported;
cross-slot scheduling configuration information of the network side device for scheduling the transmission target for the control channel; and
transmission mode information of the transmission target scheduled by the control channel.

Optionally, in a fourth condition, the bandwidth of the second frequency domain resource allocation range is less than or equal to 5 MHz.

The fourth condition includes at least one of the following:

a CSS corresponding to the control channel is a CSS for scheduling a target SIB, the third control resource set is a control resource set for scheduling the target SIB, and a bandwidth of the frequency domain resource allocation range of the third control resource set is less than or equal to 5 MHz, where the target SIB includes a SIB 1;
the time domain interval is less than or equal to a first time, where the first time is a time required by the terminal to demodulate the PDCCH;
the scheduling capability information indicates that the terminal does not support the cross-slot scheduling of the control channel and the transmission target, or capability information reported by the terminal and supporting the cross-slot scheduling of the control channel and the transmission target has not received;
the cross-slot scheduling configuration information indicates that the cross-slot scheduling of the control channel and the transmission target is not configured;
the transmission mode information indicates that no repeated transmission is performed on the transmission target; and
the transmission mode information indicates that no frequency hopping transmission is performed on the transmission target in time domain.

Optionally, the first time is determined by at least one of the following:

a capability of the terminal;
a physical downlink shared channel PDSCH processing time configured by the network side device;
a physical uplink shared channel PUSCH processing time configured by the network side device; and
a subcarrier spacing SCS of the PDCCH and an SCS of the transmission target.

Optionally, in a fifth condition, the bandwidth of the second frequency domain resource allocation range is less than or equal to 5 MHz, or the bandwidth of the second frequency domain resource allocation range is less than or equal to 20 MHz.

The fifth condition includes at least one of the following:

a CSS corresponding to the control channel is a CSS for scheduling a target SIB, the third control resource set is a control resource set for a transmission of the target system information block SIB, and a bandwidth of the frequency domain resource allocation range of the third control resource set is greater than 5 MHz, where the target SIB includes a SIB 1;
the time domain interval is greater than or equal to a first time, where the first time is a time required by the terminal to demodulate the PDCCH;
the scheduling capability information indicates that the terminal supports the cross-slot scheduling of the control channel and the transmission target;
the cross-slot scheduling configuration information indicates that the cross-slot scheduling of the control channel and the transmission target is configured;
the transmission mode information indicates that repeated transmissions are performed on the transmission target, and a bandwidth of a frequency domain resource range of a single nominal transmission or a single actual transmission is less than or equal to 5 MHz;
the transmission mode information indicates that a TB transmission over multiple slots is performed on the transmission target, and a bandwidth of a frequency domain resource range of a transmission in a single slot is less than or equal to 5 MHz; and
the transmission mode information indicates that frequency hopping transmission is performed on the transmission target in time domain, and a bandwidth of a frequency domain resource range of a transmission in each hop is less than or equal to 5 MHz.

Optionally, frequency domain resources of frequency domain resource ranges of different nominal transmissions or different actual transmissions are different; and/or

frequency domain resources of frequency domain resource ranges of transmissions in different slots are different; and/or
frequency domain resources of frequency domain resource ranges of transmissions in different hops are different.

Optionally, the processor 1204 is further configured to:
determine a frequency domain position of the second frequency domain resource allocation range according to reference information. The reference information includes at least one of the following:

a frequency domain resource boundary of a fourth control resource set for scheduling a target SIB, where the target SIB includes a SIB 1;
a frequency domain resource boundary of an active bandwidth part BWP;
a frequency domain resource boundary of an initial BWP;
a frequency domain resource boundary at which the control channel is located;
a frequency domain resource boundary configured by the network side device; and
index information of the transmission target.

Optionally, the fourth control resource set includes a control resource set including a CSS for scheduling the target SIB, where the target SIB includes the SIB 1; and/or

the frequency domain resource boundary at which the control channel is located includes at least one of the following: a frequency domain resource boundary at which a PDCCH received on the control channel is located and a frequency domain resource boundary of a control resource set at which the PDCCH received on the control channel is located; and/or
the frequency domain resource boundary includes a start physical resource block PRB or an end PRB; and/or
the index information of the transmission target includes at least one of the following:

a time domain index of the transmission target, a frequency hopping quantity index of the transmission target, and a transmission quantity index of the transmission target.

Optionally, in a case that the time domain index, the frequency hopping quantity index, or the transmission quantity index is an even number, a start PRB of the second frequency domain resource allocation range is the start PRB; and/or
in a case that the time domain index, the frequency hopping quantity index, or the transmission quantity index is an odd number, a start PRB of the second frequency domain resource allocation range is the start PRB plus a resource block RB offset; or in a case that the time domain index, the frequency hopping quantity index, or the transmission quantity index is an odd number, a start PRB of the second frequency domain resource allocation range is determined based on the end PRB.

The network side device can improve flexibility of frequency domain resource allocation.

An embodiment of this application further provides a readable storage medium, storing a program or an instruction. The program or the instruction, when executed by a processor, implements the steps of the frequency domain resource determining method provided in the embodiments of this application.

The processor is the processor in the terminal described in the foregoing embodiment. The readable storage medium includes a computer-readable storage medium, such as a computer read-only memory ROM, a random access memory RAM, a magnetic disk, or an optical disc.

An embodiment of this application further provides a chip, including a processor and a communication interface. The communication interface is coupled to the processor. The processor is configured to run a program or an instruction to implement the processes of the embodiment of the foregoing frequency domain resource determining method, and the same technical effect can be achieved. To avoid repetition, details are not described herein again.

It should be understood that the chip mentioned in this embodiment of this application may also be referred to as a system on a chip, a system chip, a chip system, a system-on-chip, or the like.

An embodiment of this application further provides a computer program/program product. The computer program/program product is stored in a storage medium and is executed by at least one processor to implement the processes of the embodiment of the foregoing frequency domain resource determining method, and the same technical effect can be achieved. To avoid repetition, details are not described herein again.

An embodiment of this application further provides a frequency domain resource determining system, including a terminal and a network side device. The terminal may be configured to perform the steps of the frequency domain resource determining method shown in FIG. 2. The network side device may be configured to perform the steps of the frequency domain resource determining method shown in FIG. 7.

It should be noted that in this specification, the term "include", "comprise", or any other variant thereof is intended to cover a non-exclusive inclusion, so that a process, method, article, or apparatus including a series of elements includes not only those elements, but also other elements not expressly listed, or elements inherent to such a process, method, article, or apparatus. Without more restrictions, the elements defined by the sentence "including a ..." do not exclude the existence of other identical elements in the process, method, article, or apparatus including the elements. In addition, it should be noted that, the scope of the methods and apparatuses in the implementations of this application is not limited to performing the functions in the order shown or discussed, but may further include performing the functions in a substantially simultaneous manner or in a reverse order depending on the functions involved. For example, the described methods may be performed in an order different from that described, and various steps may be added, omitted, or combined. In addition, features described with reference to some examples may be combined in other examples.

According to the descriptions in the foregoing implementations, a person skilled in the art may clearly learn that the method according to the foregoing embodiment may be implemented by means of software plus a necessary universal hardware platform, or certainly, by using hardware. However, in many cases, the former is a preferred implementation. Based on such an understanding, the technical solutions of this application essentially, or a part contributing to the prior art, may be presented in a form of a computer software product. The computer software product is stored in a storage medium (for example, a ROM/RAM, a magnetic disk, or an optical disc) including several instructions to enable a terminal (which may be a mobile phone, a computer, a server, an air conditioner, a network device, or the like) to perform the methods described in the embodiments of this application.

The embodiments of this application have been described above with reference to the accompanying drawings, but this application is not limited to the foregoing specific implementations. The foregoing specific implementations are only illustrative instead of restrictive. Under the inspiration of this application, without departing from the purpose of this application and the scope of protection of the claims, a person of ordinary skill in the art can still make many forms, which all fall within the protection of this application.

**Claims**

1. A frequency domain resource determining method, comprising:

   determining, by a terminal, related information of a control channel, wherein the related information of the control channel comprises at least one of the following: a first frequency domain resource allocation range of the control channel, a time domain parameter of the control channel, and scheduling information of the control channel; and
   determining, by the terminal, a bandwidth of a second frequency domain resource allocation range based on the related information, wherein the second frequency domain resource allocation range is a frequency domain resource allocation range of a transmission target, the transmission target is an object to be transmitted or received by the terminal based on the received control channel, and the transmission target comprises at least one of a channel and a signal, wherein
   the bandwidth of the second frequency domain resource allocation range is less than or equal to 5 MHz, or the bandwidth of the second frequency domain resource allocation range is less than or equal to 20 MHz.

2. The method according to claim 1, wherein the second frequency domain resource allocation range is a frequency domain resource allocation range of the transmission target considered or expected by the terminal.

3. The method according to claim 1 or 2, wherein in a case that a bandwidth of the first frequency domain resource allocation range is less than or equal to 20 MHz, the bandwidth of the second frequency domain resource allocation range is less than or equal to 5 MHz, or the bandwidth of the second frequency domain resource allocation range is less than or equal to 20 MHz; and/or
   in a case that a bandwidth of the first frequency domain resource allocation range is less than or equal to 5 MHz, the bandwidth of the second frequency domain resource allocation range is less than or equal to 5 MHz.

4. The method according to claim 1, wherein the first frequency domain resource allocation range comprises a frequency domain resource allocation range of a first control resource set associated with the control channel, wherein the first control resource set is a control resource set for scheduling a target system information block SIB, and a bandwidth of the frequency domain resource allocation range of the first control resource set is less than or equal to 20 MHz, wherein the target SIB comprises a SIB 1, wherein

in a first condition, the second frequency domain resource allocation range is equal to the frequency domain resource allocation range of the first control resource set; and/or

in a second condition, the bandwidth of the second frequency domain resource allocation range is less than or equal to 5 MHz, and/or a start position of the second frequency domain resource allocation range is the same as a start position of the first control resource set, wherein the first condition comprises at least one of the following:

a physical downlink control channel PDCCH is received in a first common search space CSS;

a PDCCH received by the terminal is scrambled by a first radio network temporary identifier RNTI;

the terminal is in an idle state or an inactive state; and

the terminal has not reported, to a network side, capability information of the terminal supporting a maximum of 5 MHz, wherein the first CSS comprises at least one of the following:

a CSS for scheduling the target SIB, wherein the target SIB comprises the SIB 1;

a CSS for scheduling another SIB, wherein the another SIB is a SIB other than the target SIB;

a CSS for receiving a PDCCH of information 2 MSG2 in a random access procedure;

a CSS for receiving a PDCCH of information B MSGB in a random access procedure;

a CSS for receiving a PDCCH of information 4 MSG4 in a random access procedure;

a CSS for receiving a PDCCH for paging; and

a CSS for receiving a PDCCH of paging early identification information; and the second condition comprises at least one of the following:

a PDCCH is received in a second CSS;

a PDCCH is received in a UE-specific search space USS;

a PDCCH received by the terminal is scrambled by a second RNTI;

the terminal is in a connected state; and

the terminal reports, to a network side, capability information of the terminal supporting a maximum of 5 MHz, wherein

the second CSS comprises a CSS for receiving a set of common downlink control information DCI for the terminal.

5. The method according to claim 1, wherein the first frequency domain resource allocation range comprises a frequency domain resource allocation range of a second control resource set associated with the control channel, wherein the second control resource set is not used for scheduling a target SIB, and a bandwidth of the frequency domain resource allocation range of the second control resource set is less than or equal to 20 MHz, wherein the target SIB comprises a SIB 1, wherein

the bandwidth of the second frequency domain resource allocation range is less than or equal to 5 MHz, and/or a start position of the second frequency domain resource allocation range is the same as a start position of the control resource set or a currently active bandwidth part BWP; and/or

in a third condition, the bandwidth of the second frequency domain resource allocation range is less than or equal to 5 MHz, or the bandwidth of the second frequency domain resource allocation range is less than or equal to 20 MHz, wherein the third condition comprises:

there is no overlap between a slot in which a PDCCH received by the terminal on the control channel is located and a slot in which the transmission target is located.

6. The method according to claim 1 or 2, wherein the first frequency domain resource allocation range comprises a frequency domain resource allocation range of a third control resource set associated with the control channel; or

the time domain parameter of the control channel comprises a time domain interval between a last time domain symbol on which a PDCCH received by the terminal on the control channel is located and a first time domain symbol, wherein the first time domain symbol is a first time domain symbol on which the transmission target is located; or

the scheduling information of the control channel comprises at least one of the following:

scheduling capability information of the terminal for scheduling the transmission target for the control channel, wherein the scheduling capability information indicates whether cross-slot scheduling of the control channel and the transmission target is supported;

cross-slot scheduling configuration information of a network side for scheduling the transmission target for the control channel; and

transmission mode information of the transmission target scheduled by the control channel.

7. The method according to claim 6, wherein in a fourth condition, the bandwidth of the second frequency domain resource allocation range is less than or equal to 5 MHz, wherein

the fourth condition comprises at least one of the following:

a CSS corresponding to the control channel is a CSS for scheduling a target SIB, the third control resource set is a control resource set for scheduling the target SIB, and a bandwidth of the frequency domain resource allocation range of the third control resource set is less than or equal to 5 MHz, wherein the target SIB comprises a SIB 1;

the time domain interval is less than or equal to a first time, wherein the first time is a time required by the terminal to demodulate the PDCCH;

the scheduling capability information indicates that the terminal does not support the cross-slot scheduling of the control channel and the transmission target, or the terminal has not reported capability information of supporting the cross-slot scheduling of the control channel and the transmission target;

the cross-slot scheduling configuration information indicates that the cross-slot scheduling of the control channel and the transmission target is not configured;

the transmission mode information indicates that no repeated transmission is performed on the transmission target; and

the transmission mode information indicates that no frequency hopping transmission is performed on the transmission target in time domain.

8. The method according to claim 7, wherein the first time is determined by at least one of the following:

a capability of the terminal;
a physical downlink shared channel PDSCH processing time configured by the network side;

a physical uplink shared channel PUSCH processing time configured by the network side; and

a subcarrier spacing SCS of the PDCCH and an SCS of the transmission target.

9. The method according to claim 6, wherein in a fifth condition, the bandwidth of the second frequency domain resource allocation range is less than or equal to 5 MHz, or the bandwidth of the second frequency domain resource allocation range is less than or equal to 20 MHz, wherein

the fifth condition comprises at least one of the following:

a CSS corresponding to the control channel is a CSS for scheduling a target SIB, the third control resource set is a control resource set for a transmission of the target system information block SIB, and a bandwidth of the frequency domain resource allocation range of the third control resource set is greater than 5 MHz, wherein the target SIB comprises a SIB 1;

the time domain interval is greater than or equal to a first time, wherein the first time is a time required by the terminal to demodulate the PDCCH;

the scheduling capability information indicates that the terminal supports the cross-slot scheduling of the control channel and the transmission target;

the cross-slot scheduling configuration information indicates that the cross-slot scheduling of the control channel and the transmission target is configured;

the transmission mode information indicates that repeated transmissions are performed on the transmission target, and a bandwidth of a frequency domain resource range of a single nominal transmission or a single actual transmission is less than or equal to 5 MHz;

the transmission mode information indicates that a TB transmission over multiple slots is performed on the transmission target, and a bandwidth of a frequency domain resource range of a transmission in a single slot is less than or equal to 5 MHz; and

the transmission mode information indicates that frequency hopping transmission is performed on the transmission target in time domain, and a bandwidth of a frequency domain resource range of a transmission in each hop is less than or equal to 5 MHz.

10. The method according to claim 9, wherein frequency domain resources of frequency domain resource ranges of different nominal transmissions or different actual transmissions are different; and/or

frequency domain resources of frequency domain resource ranges of transmissions in different slots are different; and/or

frequency domain resources of frequency domain resource ranges of transmissions in different hops are different.

11. The method according to claim 1 or 2, wherein the method further comprises:

determining, by the terminal, a frequency domain position of the second frequency domain resource allocation range according to reference information, wherein the reference information comprises at least one of the following:

a frequency domain resource boundary of a fourth control resource set for scheduling a target SIB, wherein the target SIB comprises a SIB 1;

a frequency domain resource boundary of an active bandwidth part BWP;

a frequency domain resource boundary of an initial BWP;

a frequency domain resource boundary at which the control channel is located;

a frequency domain resource boundary configured by a network side; and

index information of the transmission target.

12. The method according to claim 11, wherein the fourth control resource set comprises: a control resource set comprising a CSS for scheduling the target SIB, wherein the target SIB comprises the SIB 1; and/or

the frequency domain resource boundary at which the control channel is located comprises at least one of the following: a frequency domain resource boundary at which a PDCCH received on the control channel is located and a frequency domain resource boundary of a control resource set at which the PDCCH received on the control channel is located; and/or

the frequency domain resource boundary comprises: a start physical resource block PRB or an end PRB; and/or

the index information of the transmission target comprises at least one of the following: a time domain index of the transmission target, a frequency hopping quantity index of the transmission target, and a transmission quantity index of the transmission target.

13. The method according to claim 12, wherein in a case that the time domain index, the frequency hopping quantity index, or the transmission quantity index is an even number, a start PRB of the second frequency domain resource allocation range is the start PRB; and/or

in a case that the time domain index, the frequency hopping quantity index, or the transmission quantity index is an odd number, a start PRB of the second frequency domain resource allocation range is the start PRB plus a resource block RB offset; or in a case that the time domain index, the frequency hopping quantity index, or the transmission quantity index is an odd number, a start PRB of the second frequency domain resource allocation range is determined based on the end PRB.

14. The method according to claim 1 or 2, wherein the method further comprises:
receiving, by the terminal, transmissions on a target resource, and storing all the received transmissions, wherein a frequency domain resource of the target resource comprises the second frequency domain resource range, and a time domain resource of the target resource comprises at least Y symbols, wherein Y is a positive integer.

15. The method according to claim 14, wherein a start position of the second frequency domain resource range is a start PRB of a control resource set in which a PDCCH that the terminal needs to receive is located, or a start position of the second frequency domain resource range is a start PRB of an active BWP or an initial BWP, wherein the active BWP or the initial BWP comprises all or some resources of a control resource set in which a PDCCH that the terminal needs to receive is located; and/or
a start position of the Y symbols is a first symbol or a last symbol on which a PDCCH received on the control channel is located, wherein a value of Y is equal to a quantity of symbols required for the terminal to demodulate the PDCCH, or a value of Y is equal to a symbol index of the first symbol on which the PDCCH is located -1 subtracted from a quantity of symbols in one slot.

16. A frequency domain resource determining method, comprising:

determining, by a network side device, related information of a control channel, wherein the related information of the control channel comprises at least one of the following: a first frequency domain resource allocation range of the control channel, a time domain parameter of the control channel, and scheduling information of the control channel; and
determining, by the network side device, a bandwidth of a second frequency domain resource allocation range based on the related information, wherein the second frequency domain resource allocation range is a frequency domain resource allocation range of a transmission target, the transmission target is an object to be transmitted or received by the network side device based on the transmitted control channel, and the transmission target comprises at least one of a channel and a signal, wherein

the bandwidth of the second frequency domain resource allocation range is less than or equal to 5 MHz, or the bandwidth of the second frequency domain resource allocation range is less than or equal to 20 MHz.

17. The method according to claim 16, wherein in a case that a bandwidth of the first frequency domain resource allocation range is less than or equal to 20MHz, the bandwidth of the second frequency domain resource allocation range is less than or equal to 5 MHz, or the bandwidth of the second frequency domain resource allocation range is less than or equal to 20 MHz; and/or

in a case that a bandwidth of the first frequency domain resource allocation range is less than or equal to 5 MHz, the bandwidth of the second frequency domain resource allocation range is less than or equal to 5 MHz.

18. The method according to claim 16, wherein the first frequency domain resource allocation range comprises a frequency domain resource allocation range of a first control resource set associated with the control channel, wherein the first control resource set is a control resource set for scheduling a target system information block SIB, and a bandwidth of the frequency domain resource allocation range of the first control resource set is less than or equal to 20 MHz, wherein the target SIB comprises a SIB 1, wherein

in a first condition, the second frequency domain resource allocation range is equal to the frequency domain resource allocation range of the first control resource set; and/or
in a second condition, the bandwidth of the second frequency domain resource allocation range is less than or equal to 5 MHz, and/or a start position of the second frequency domain resource allocation range is the same as a start position of the first control resource set, wherein the first condition comprises at least one of the following:

a physical downlink control channel PDCCH is transmitted in a first common search space CSS;
a PDCCH transmitted by the network side device is scrambled by a first radio network temporary identifier RNTI;
a terminal corresponding to the control channel is in an idle state or an inactive state; and

the network side device has not received capability information reported by a terminal indicating that the terminal supports a maximum of 5 MHz, wherein
the first CSS comprises at least one of the following:

a CSS for scheduling the target SIB, wherein the target SIB comprises the SIB 1;
a CSS for scheduling another SIB, wherein the another SIB is a SIB other than the target SIB;
a CSS for transmitting a PDCCH of information 2 MSG2 in a random access procedure;
a CSS for transmitting a PDCCH of information B MSGB in a random access procedure;
a CSS for transmitting a PDCCH of information 4 MSG4 in a random access procedure;
a CSS for transmitting a PDCCH for paging; and
a CSS for transmitting a PDCCH of paging early identification information; and
the second condition comprises at least one of the following:

a PDCCH is transmitted in a second CSS;
a PDCCH is received in a UE-specific search space USS;
a PDCCH transmitted by the network side device is scrambled by a second RNTI;
a terminal corresponding to the control channel is in a connected state; and
the network side device has received capability information reported by a terminal indicating that the terminal supports a maximum of 5 MHz, wherein
the second CSS comprises a CSS for receiving a set of common downlink control information DCI for the terminal.

19. The method according to claim 16, wherein the first frequency domain resource allocation range comprises a frequency domain resource allocation range of a second control resource set associated with the control channel, the second control resource set is not used for scheduling a target SIB, a bandwidth of the frequency domain resource allocation range of the second control resource set is less than or equal to 20 MHz, and the target SIB comprises a SIB 1, wherein

the bandwidth of the second frequency domain resource allocation range is less than or equal to 5 MHz, and/or a start position of the second frequency domain resource allocation range is the same as a start position of the control resource set or a currently active bandwidth part BWP; and/or
in a third condition, the bandwidth of the second frequency domain resource allocation range is less than or equal to 5 MHz, or the bandwidth of the second frequency domain resource allocation range is less than or equal to 20 MHz, wherein the third condition comprises:
there is no overlap between a slot in which a PDCCH transmitted by the network side device on the control channel is located and a slot in which the transmission target is located.

20. The method according to claim 16, wherein the first frequency domain resource allocation range comprises a frequency domain resource allocation range of a third control resource set associated with the control channel; or

the time domain parameter of the control channel comprises a time domain interval between a last time domain symbol on which a PDCCH received by a terminal on the control channel is located and a first time domain symbol, wherein the first time domain symbol is a first time domain symbol on which the transmission target is located; or
the scheduling information of the control channel comprises at least one of the following:

scheduling capability information of a terminal corresponding to the control channel for scheduling the transmission target for the control channel, wherein the scheduling capability information indicates whether cross-slot scheduling of the control channel and the transmission target is supported;
cross-slot scheduling configuration information of the network side device for scheduling the transmission target for the control channel; and
transmission mode information of the transmission target scheduled by the control channel.

21. The method according to claim 20, wherein in a fourth condition, the bandwidth of the second frequency domain resource allocation range is less than or equal to 5 MHz; and
the fourth condition comprises at least one of the following:

a CSS corresponding to the control channel is a CSS for scheduling a target SIB, the third control resource set is a control resource set for scheduling the target SIB, and a bandwidth of the frequency domain resource allocation range of the third control resource set is less than or equal to 5 MHz, wherein the target SIB comprises a SIB 1;
the time domain interval is less than or equal to a first time, wherein the first time is a time required by the terminal to demodulate the PDCCH;
the scheduling capability information indicates that the terminal does not support the cross-slot scheduling of the control channel and the transmission target, or capability information reported by the terminal and supporting the cross-slot scheduling of the control channel and the transmission target has not received;
the cross-slot scheduling configuration information indicates that the cross-slot scheduling of the control channel and the transmission target is not configured;
the transmission mode information indicates that no repeated transmission is performed on the transmission target; and
the transmission mode information indicates that no frequency hopping transmission is performed on the transmission target in time domain.

22. The method according to claim 21, wherein the first time is determined by at least one of the following:

a capability of the terminal;
a physical downlink shared channel PDSCH processing time configured by the network side device;
a physical uplink shared channel PUSCH processing time configured by the network side device; and
a subcarrier spacing SCS of the PDCCH and an SCS of the transmission target.

23. The method according to claim 20, wherein in a fifth condition, the bandwidth of the second frequency domain resource allocation range is less than or equal to 5 MHz, or the bandwidth of the second frequency domain resource allocation range is less than or equal to 20 MHz, wherein
the fifth condition comprises at least one of the following:

a CSS corresponding to the control channel is a CSS for scheduling a target SIB, the third control resource set is a control resource set for a transmission of the target system information block SIB, and a bandwidth of the frequency domain resource allocation range of the third control resource set is greater than 5 MHz, wherein the target SIB comprises a SIB 1;
the time domain interval is greater than or equal to a first time, wherein the first time is a time required by the terminal to demodulate the PDCCH;
the scheduling capability information indicates that the terminal supports the cross-slot scheduling of the control channel and the transmission target;
the cross-slot scheduling configuration information indicates that the cross-slot scheduling of the control channel and the transmission target is configured;
the transmission mode information indicates that repeated transmissions are performed on the transmission target, and a bandwidth of a frequency domain resource range of a single nominal transmission or a single actual transmission is less than or equal to 5 MHz;
the transmission mode information indicates that a TB transmission over multiple slots is performed on the transmission target, and a bandwidth of a frequency domain resource range of a transmission in a single slot is less than or equal to 5 MHz; and
the transmission mode information indicates that frequency hopping transmission is performed on the transmission target in time domain, and a bandwidth of a frequency domain resource range of a transmission in each hop is less than or equal to 5 MHz.

24. The method according to claim 23, wherein frequency domain resources of frequency domain resource ranges of different nominal transmissions or different actual transmissions are different; and/or

    frequency domain resources of frequency domain resource ranges of transmissions in different slots are different; and/or
    frequency domain resources of frequency domain resource ranges of transmissions in different hops are different.

25. The method according to claim 16, wherein the method further comprises:
determining, by the network side device, a frequency domain position of the second frequency domain resource allocation range according to reference information, wherein the reference information comprises at least one of the following:

    a frequency domain resource boundary of a fourth control resource set for scheduling a target SIB, wherein the target SIB comprises a SIB 1;
    a frequency domain resource boundary of an active bandwidth part BWP;
    a frequency domain resource boundary of an initial BWP;
    a frequency domain resource boundary at which the control channel is located;
    a frequency domain resource boundary configured by the network side device; and
    index information of the transmission target.

26. The method according to claim 25, wherein the fourth control resource set comprises: a control resource set comprising a CSS for scheduling the target SIB, wherein the target SIB comprises the SIB 1; and/or

    the frequency domain resource boundary at which the control channel is located comprises at least one of the following: a frequency domain resource boundary at which a PDCCH received on the control channel is located and a frequency domain resource boundary of a control resource set at which the PDCCH received on the control channel is located; and/or
    the frequency domain resource boundary comprises: a start physical resource block PRB or an end PRB; and/or
    the index information of the transmission target comprises at least one of the following:
    a time domain index of the transmission target, a frequency hopping quantity index of the transmission target, and a transmission quantity index of the transmission target.

27. The method according to claim 26, wherein in a case that the time domain index, the frequency hopping quantity index, or the transmission quantity index is an even number, a start **PRB** of the second frequency domain resource allocation range is the start PRB; and/or
in a case that the time domain index, the frequency hopping quantity index, or the transmission quantity index is an odd number, a start PRB of the second frequency domain resource allocation range is the start PRB plus a resource block RB offset; or in a case that the time domain index, the frequency hopping quantity index, or the transmission quantity index is an odd number, a start PRB of the second frequency domain resource allocation range is determined based on the end PRB.

28. A frequency domain resource determining apparatus, comprising:

    a first determining module, configured to determine related information of a control channel, wherein the related information of the control channel comprises at least one of the following: a first frequency domain resource allocation range of the control channel, a time domain parameter of the control channel, and scheduling information of the control channel; and a second determining module, configured to determine a bandwidth of a second frequency domain resource allocation range based on the related information, wherein the second frequency domain resource allocation range is a frequency domain resource allocation range of a transmission target, the transmission target is an object to be transmitted or received by a terminal based on the received control channel, and the transmission target comprises at least one of a channel and a signal, wherein the bandwidth of the second frequency domain resource allocation range is less than or equal to 5 MHz, or the bandwidth of the second frequency domain resource allocation range is less than or equal to 20 MHz.

29. A frequency domain resource determining apparatus, comprising:

a first determining module, configured to determine related information of a control channel, wherein the related information of the control channel comprises at least one of the following: a first frequency domain resource allocation range of the control channel, a time domain parameter of the control channel, and scheduling information of the control channel; and a second determining module, configured to determine a bandwidth of a second frequency domain resource allocation range based on the related information, wherein the second frequency domain resource allocation range is a frequency domain resource allocation range of a transmission target, the transmission target is an object to be transmitted or received by a network side device based on the transmitted control channel, and the transmission target comprises at least one of a channel and a signal, wherein the bandwidth of the second frequency domain resource allocation range is less than or equal to 5 MHz, or the bandwidth of the second frequency domain resource allocation range is less than or equal to 20 MHz.

30. A terminal, comprising a processor and a memory, wherein the memory stores a program or an instruction runnable on the processor, and the program or the instruction, when executed by the processor, implements the steps of the frequency domain resource determining method according to any one of claims 1 to 15.

31. A network side device, comprising a processor and a memory, wherein the memory stores a program or an instruction runnable on the processor, and the program or the instruction, when executed by the processor, implements the steps of the frequency domain resource determining method according to any one of claims 16 to 27.

32. A readable storage medium, storing a program or an instruction, wherein the program or the instruction, when executed by a processor, implements the steps of the frequency domain resource determining method according to any one of claims 1 to 15, or the program or the instruction, when executed by a processor, implements the steps of the frequency domain resource determining method according to any one of claims 16 to 27.

FIG. 1

FIG. 2

PDCCH    Demodulation reference
         signal for physical        PDSCH
         downlink shared channel
         (DMRS for PDSCH)

Frequency

Time

AL=8

Slot 0

24 PRBs

CCE #0   CCE #2   CCE #4   CCE #6   CCE #1   CCE #3   CCE #5   CCE #7

X ms

24 PRBs

AL=8

Slot 1

CCE #0   CCE #2   CCE #4   CCE #6   CCE #1   CCE #3   CCE #5   CCE #7

12 PRBs

FIG. 3

FIG. 4

FIG. 5

FIG. 6

FIG. 7

800

First determining module — 801

Second determining module — 802

Frequency domain resource
determining apparatus

## FIG. 8

900

First determining module — 901

Second determining module — 902

Frequency domain resource
determining apparatus

## FIG. 9

1000

Communication device

1001 — Processor ⇔ Memory — 1002

## FIG. 10

FIG. 11

FIG. 12

## INTERNATIONAL SEARCH REPORT

International application No.

**PCT/CN2023/100172**

### A. CLASSIFICATION OF SUBJECT MATTER

H04W 72/04(2023.01)i; H04L5/00(2006.01)n

According to International Patent Classification (IPC) or to both national classification and IPC

### B. FIELDS SEARCHED

Minimum documentation searched (classification system followed by classification symbols)

IPC:H04W H04Q H04L

Documentation searched other than minimum documentation to the extent that such documents are included in the fields searched

Electronic data base consulted during the international search (name of data base and, where practicable, search terms used)

3GPP, CNTXT, DWPI, ENTXT, ENTXTC: 带宽, 控制信道, 频域, 起始位置, 小于, 最大带带, 20MHz, 5MHz, bandwidth, CORESET, CSS, redcap, SIB, frequency domain, less than, frequency range, PDCCH, BWP

### C. DOCUMENTS CONSIDERED TO BE RELEVANT

| Category* | Citation of document, with indication, where appropriate, of the relevant passages | Relevant to claim No. |
|---|---|---|
| X | WO 2022021031 A1 (GUANGDONG OPPO MOBILE TELECOMMUNICATIONS CORP., LTD.) 03 February 2022 (2022-02-03) description, page 5, line 7-page 11, line 21, and claims 73-74 and 77-78 | 1-32 |
| X | WO 2022080922 A1 (LG ELECTRONICS INC.) 21 April 2022 (2022-04-21) description, paragraphs 396-525 | 1-32 |
| A | WO 2021155822 A1 (QUALCOMM INC.) 12 August 2021 (2021-08-12) entire document | 1-32 |
| A | CN 113676293 A (HUAWEI TECHNOLOGIES CO., LTD.) 19 November 2021 (2021-11-19) entire document | 1-32 |

☐ Further documents are listed in the continuation of Box C.    ☑ See patent family annex.

| | | | |
|---|---|---|---|
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
|---|---|
| **11 September 2023** | **15 September 2023** |

| Name and mailing address of the ISA/CN | Authorized officer |
|---|---|
| **China National Intellectual Property Administration (ISA/CN)** **China No. 6, Xitucheng Road, Jimenqiao, Haidian District, Beijing 100088** | |
| | Telephone No. |

Form PCT/ISA/210 (second sheet) (July 2022)

INTERNATIONAL SEARCH REPORT
Information on patent family members

International application No.

**PCT/CN2023/100172**

| Patent document cited in search report | | | Publication date (day/month/year) | Patent family member(s) | | | Publication date (day/month/year) |
|---|---|---|---|---|---|---|---|
| WO | 2022021031 | A1 | 03 February 2022 | EP | 4192150 | A1 | 07 June 2023 |
| | | | | US | 2023179374 | A1 | 08 June 2023 |
| WO | 2022080922 | A1 | 21 April 2022 | KR | 20230087450 | A | 16 June 2023 |
| WO | 2021155822 | A1 | 12 August 2021 | EP | 4101200 | A1 | 14 December 2022 |
| | | | | US | 2023036057 | A1 | 02 February 2023 |
| | | | | WO | 2021155495 | A1 | 12 August 2021 |
| | | | | CN | 115039437 | A | 09 September 2022 |
| CN | 113676293 | A | 19 November 2021 | WO | 2021228256 | A1 | 18 November 2021 |
| | | | | EP | 4149132 | A1 | 15 March 2023 |
| | | | | US | 2023087902 | A1 | 23 March 2023 |

Form PCT/ISA/210 (patent family annex) (July 2022)

**REFERENCES CITED IN THE DESCRIPTION**

**Patent documents cited in the description**

- CN 202210705568